# EUROPEAN PATENT SPECIFICATION

(11) **EP 1 093 631 B1**
(45) Date of publication and mention of the grant of the patent: **24.08.2005**
(21) Application number: 00931093.9
(22) Date of filing: 02.05.2000
(51) Int. Cl.: G06K 7/00

(54) **ONE-PIECE ELECTRICAL CONNECTOR FOR THE CONNECTION OF A SMART CARD**
EINSTÜCKIGER ELEKTRISCHER VERBINDER ZUR VERBINDUNG EINER SMART KARTE
CONNECTEUR ELECTRIQUE MONOBLOC PERMETTANT LA CONNEXION D'UNE CARTE A PUCE

(30) Priority: 07.05.1999 FR 9905857
(43) Date of publication of application: 25.04.2001
(73) Proprietor: ITT MANUFACTURING ENTERPRISES, INC., Delaware 19801 (US)
(72) Inventor: BRICAUD, Hervé, F-39100 Dole (FR); PIZARD, Yves, F-39100 Dole (FR)
(74) Representative: Kohn, Philippe
(86) International application number: PCT/EP2000/003906
(87) International publication number: WO 2000/068867

(56) References cited:
- EP-A- 0 849 842
- WO-A-97/32275
- FR-A- 2 720 864
- FR-A- 2 737 321
- US-A- 5 746 607
- US-A- 5 775 949
- US-A- 5 807 124

## Description

The present invention relates to an electrical connector for the connection of a card with an electronic memory, or smart card, having, on one of its main faces, a plurality of electrical contact pads which are aligned parallel to the direction of insertion of the card into a read-write device.

The invention relates more particularly to a connector of the type having a body made of insulating material forming a contact carrier, the said body having a horizontal upper plane face parallel to the longitudinal direction of insertion of the card into a read-write device, and a plurality of electrical conductors in the form of elastically deformable blades which are placed parallel to the direction of insertion of the card, each contact blade comprising :
- a curved first end for contact with a corresponding pad on the card, the said first end projecting out of the plane of the upper plane face of the insulating body and being extended by a nose which is elastically pressed, vertically upwards, so as to bear against a stop surface ;
- a central portion for linking the blade to the insulating body; and
- a second end for connecting the blade to a processing circuit of the read-write device ;
and of the type in which :
- the insulating body is bounded longitudinally by at least one rear vertical plane transverse face,
- each housing accommodates a contact blade,
- each of said housings runs longitudinally and opens into said rear transverse face, for permitting fitting thereinto of the accommodated contact blade by insertion longitudinally from the rear towards the front,
- and each housing is open in the plane upper face of the insulating body for passage of the said curved contact end.

Such a design is described in document WO-A-95/18421 reflecting the preamble of claim 1. In that document, the electrical connector has an attached lid moulded from plastic, one part of which constitutes the said stop surface against which the noses of the contact ends of the contact blades bear.

Such a design is complex and expensive and it also has the drawback of increasing the lengthwise size of the connector, especially insofar as the lid has a perimeter which surrounds the transverse lateral faces of the lower insulating body, which forms the contact carrier, to which insulating body the upper lid is attached.

In order to dispense with the presence of a lid, one solution consists in providing the free, contact end of each blade with transverse tabs or "moustaches" which engage with facing parts of the upper face of the insulating body which define the slots through which the curved contact ends of the contact blades project. This solution has the drawback of increasing the transverse width of the contact blades and thus of increasing the amount of conductive material needed for manufacture insofar as it is not possible then to cut them simultaneously and in a manner so that they are imbricated in series of adjacent blades spaced apart according to their final mounting pitch.

Another solution consists in introducing each contact blade vertically upwards into a complementary housing in the insulating body, but the retention and fastening of each blade in its housing then cannot be easily and effectively provided, especially in the case of a connector with a low height, and especially it is not possible to use the technique of insertion and longitudinal retention by means of a harpoon, as described in that same document.

In addition, the capacity for that branch of each contact blade having the curved contact end to bend is reduced.

Another electrical connector is described in document WO-A-97/32275.

In order to remedy these drawbacks, the invention proposes a connector of the above-mentioned type, characterized in that the said stop surface belongs to a crosspiece moulded as one piece with the insulating body.

According to further features of the invention :
- the said stop surface consists of the lower face of the crosspiece and the upper face of the crosspiece is a portion of the plane upper face of the insulating body ;
- the crosspiece is adjacent to the said transverse face and the crosspiece extends in line with the said housing ;
- each housing runs vertically downwards into a horizontal plane lower face of the insulating body ;
- the central linking part of each blade is a hairpin-shaped bent-over part extending approximately parallel to the upper plane face of the insulating body, comprising a first branch of which the free end is extended by the connecting end of the blade, which first branch includes means for fastening the blade to the insulating body, and comprising a second branch of which the free end is extended by the curved contact end of the blade, the first and second branches being joined together by a central U-shaped bend directed towards the centre of the connector ;
- the free end of the first branch of the central linking part of the blade is embedded in a housing in the insulating body ;
- the curved contact end of each blade extends approximately in line with the embedded free end of the first branch of the central linking part of the blade ;
- the curved contact end is located longitudinally between the said central bend and the connecting end ;
- the connecting end of each blade projects longitudinally rearwards beyond the said rear transverse face ;
- the connecting end of each blade is located longitudinally to the front of the said rear transverse face ;
- the connecting end of each blade extends horizontally ;
- the connecting end of each blade extends vertically downwards ;
- the connecting end of each blade extends downwards below the lower plane face of the insulating body, making an acute angle with the plane of this face, and the connecting end is elastically deformable ;
- the connecting end is visible from outside the insulating body ;
- the connector includes an integrated electrical switch for detecting the longitudinal position of the card with respect to the insulating body ;
- the insulating body is bounded by longitudinally oriented vertical lateral faces and transversely oriented vertical lateral faces, and by a horizontal plane lower face, and at least one of the pairs of opposed lateral faces each has a lower rim which projects outwards from the insulating body and which is bounded vertically upwards by a horizontal upper facet, especially for another component to bear on this facet ;
- the transverse distance separating a longitudinal lateral face from the vertical mid-plane passing through the immediately adjacent pair of blades is equal to half the standardized pitch separating two adjacent blades ;
- the insulating body includes profiles allowing it to be fitted into a complementary accessory.

Further features and advantages of the invention will appear upon reading the detailed description which follows, for the understanding of which reference will be made to the appended drawings in which:
- Figure 1 is an isometric perspective top view of a first embodiment of an electrical connector according to the teachings of the invention, which connector is fitted with contact blades of the type shown in Figure 8 ;
- Figure 2 is a top view of the connector illustrated in Figure 1 ;
- Figure 3 is a side view of the connector illustrated in Figure 2 ;
- Figure 4 is an isometric perspective top view of the insulating body of the connector illustrated in Figures 1 and 2 ;
- Figure 5 is an isometric perspective bottom view of the insulating body ;
- Figure 6 is a longitudinal sectional view on the line 6-6 in Figure 2 ;
- Figure 7 is a longitudinal sectional view on the line 7-7 in Figure 2 ;
- Figure 8 is a perspective view on a large scale of one of the contact blades with which the electrical connector illustrated in Figures 1 to 7 is fitted ;
- Figures 9 to 13 are views similar to those in Figure 8, which show five alternative embodiments of the contact blade and which differ from each other by the design of their connecting tab ;
- Figure 14 is a view similar to that in Figure 1, which illustrates an alternative embodiment of an electrical connector according to the invention with three pairs of contact blades ;
- Figure 15 is a view similar to that of Figure 1, which illustrates an alternative embodiment of an electrical connector according to the invention, the contact blades of which are of the type illustrated in Figure 9 ;
- Figure 16 is a view similar to that of Figure 1, which illustrates an alternative embodiment of an electrical connector according to the invention, the contact blades of which are of the type illustrated in Figure 11 ;
- Figure 17 is a perspective bottom view of the connector in Figure 16 ;
- Figures 18 and 19 are views similar to those in Figures 16 and 17 and show a connector having contact blades of the type illustrated in Figure 12 ;
- Figure 20 is a side view on a large scale of the connector illustrated in Figures 18 and 19 ;
- Figures 21 and 22 are perspective top and bottom views of the insulating body of the connector illustrated in Figures 18 to 20 ;
- Figures 23 to 25 are views similar to those in Figures 20 to 22, which show an electrical connector according to the invention fitted with contact blades of the type shown in Figure 13 ;
- Figures 26 and 27 are perspective top and bottom views of an alternative design of the insulating body of an electrical connector with three pairs of contact blades having resilient connecting tabs ;
- Figures 28 and 29 are isometric perspective top and bottom views of an alternative embodiment of an electrical connector according to the invention, which includes an integrated switch for detecting the presence of a card ;
- Figure 30 is a top view of the connector shown in Figures 28 and 29 ;
- Figure 31 is a side view of the connector illustrated in Figures 28 to 30 ;
- Figures 32 to 35 are views similar to that in Figures 28 to 31, which show another alternative embodiment of a connector having an integrated switch ;
- Figures 36 and 37 are isometric perspective top and bottom views of a connector of the type illustrated in Figures 26 and 27, which illustrate an alternative embodiment of the insulating body ;
- Figure 38 is a perspective top view of an electrical connector according to the invention, which is fitted with an attached accessory forming a casing for guiding the card ;

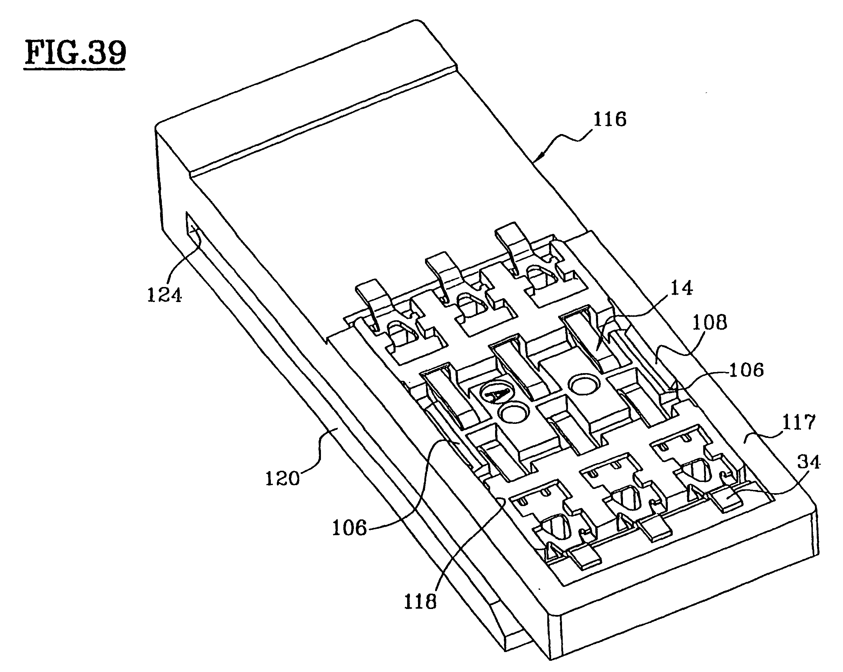

- Figure 39 is a perspective bottom view of the connector with its accessory in Figure 38 ;

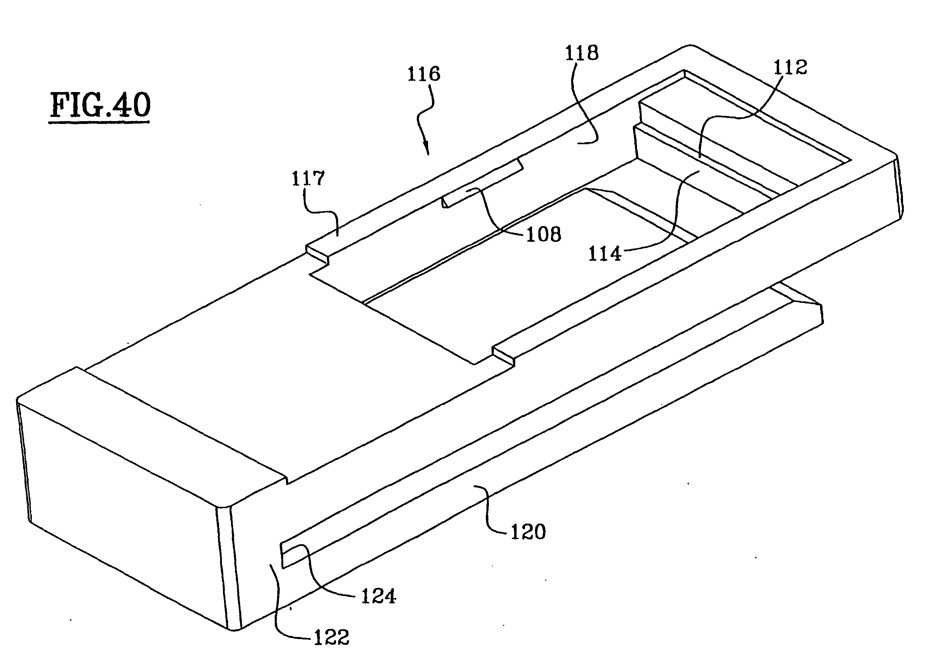

- Figure 40 is a perspective bottom view of the accessory shown in Figures 38 and 39 ;

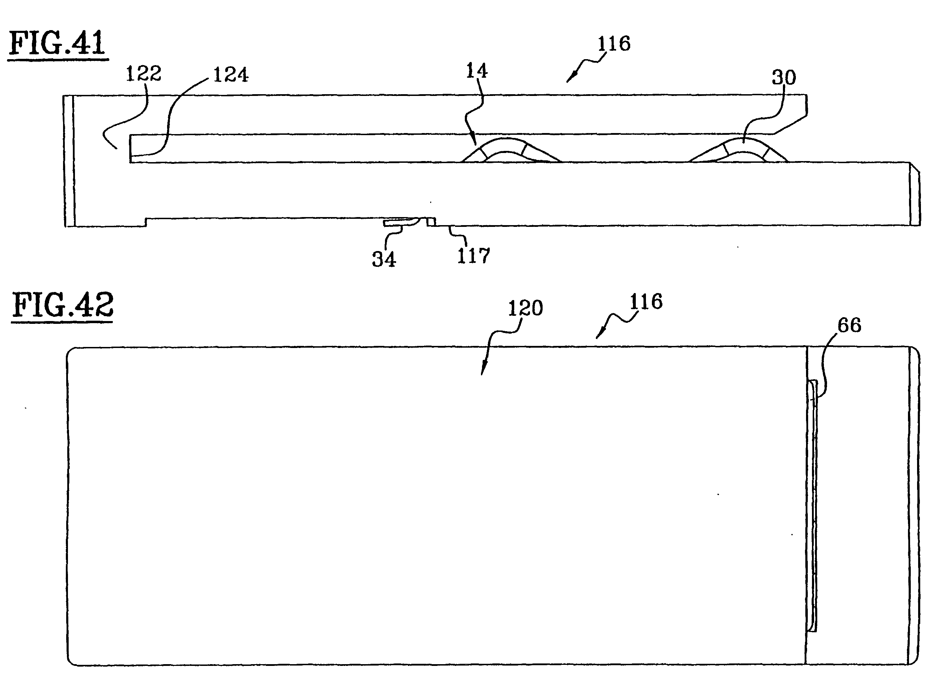

- Figure 41 is a side view on a large scale of the assembly illustrated in Figures 38 and 39 ;
- Figure 42 is a top view of Figure 41 ;

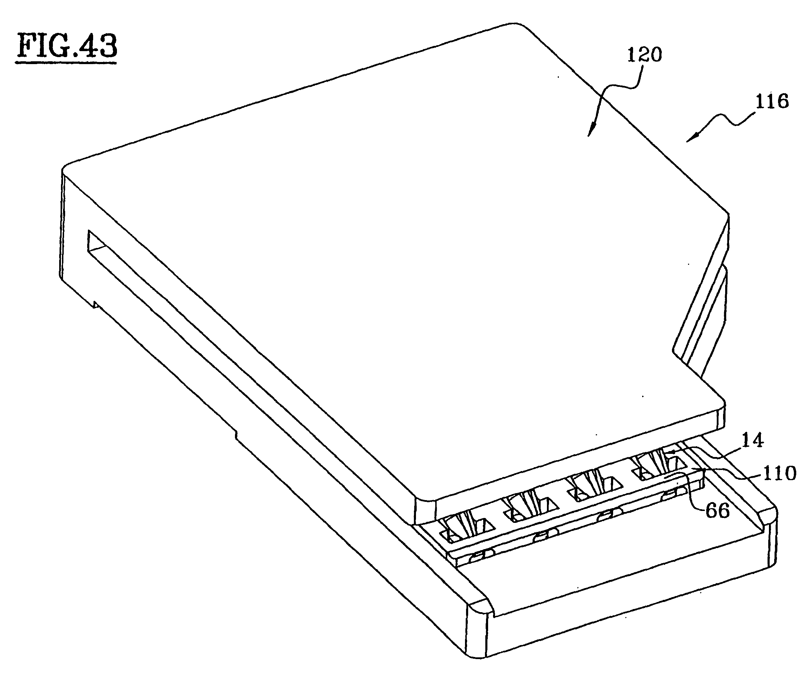

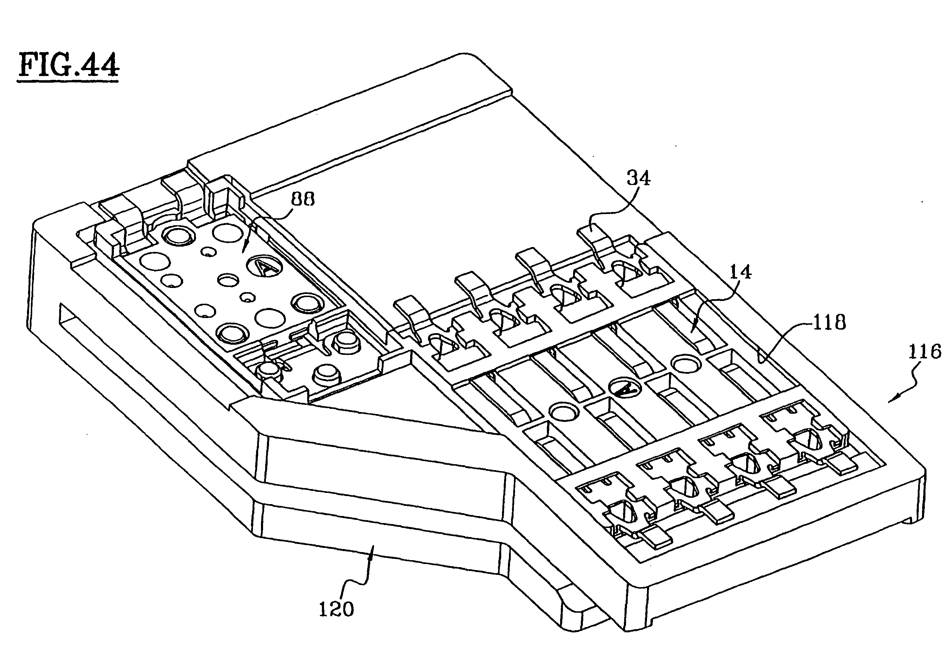

- Figures 43 and 44 are two perspective views, from the top and from the bottom, of a connector/accessory assembly which includes an integrated switch ;
- Figures 45 to 49 are views similar to those in Figures 36 to 40, which illustrate an alternative embodiment of the retention means whereby the connector is fitted into the accessory ;
- Figure 50 is a longitudinal sectional view in a vertical mid-plane of the assembly illustrated in Figure 47 ;
- Figure 51 is a cross-sectional view in a vertical mid-plane of the connector of the assembly illustrated in Figure 49 ; and
- Figure 52 is a longitudinal end view of the assembly illustrated in Figure 47.

In the description which follows, identical, similar or analogous elements will be denoted by the same reference numbers.

In order to facilitate the description and the drafting of the claims, these will use, in a non-limiting manner, the terms vertical, horizontal, upper, lower, front, rear, etc. and these apply when referring to the figures.

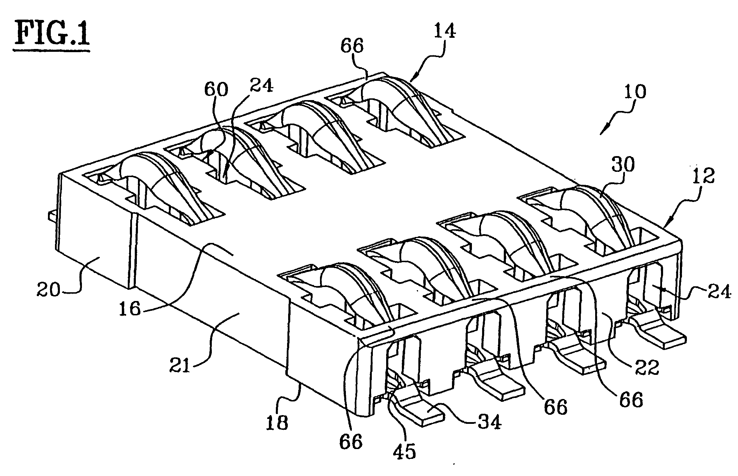

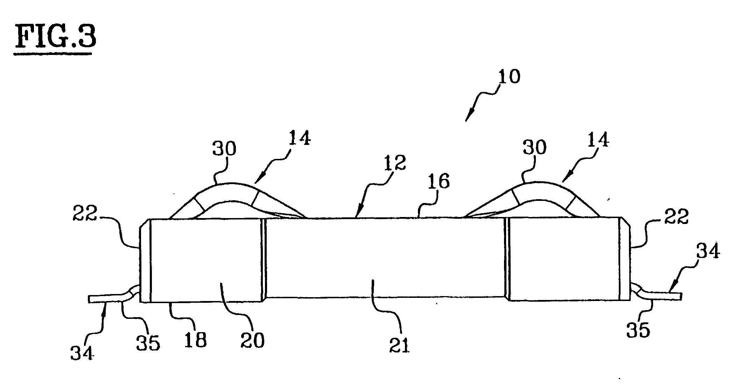

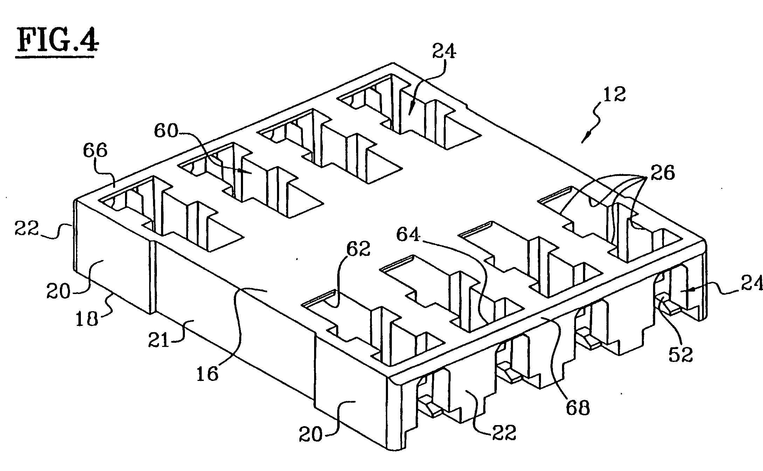

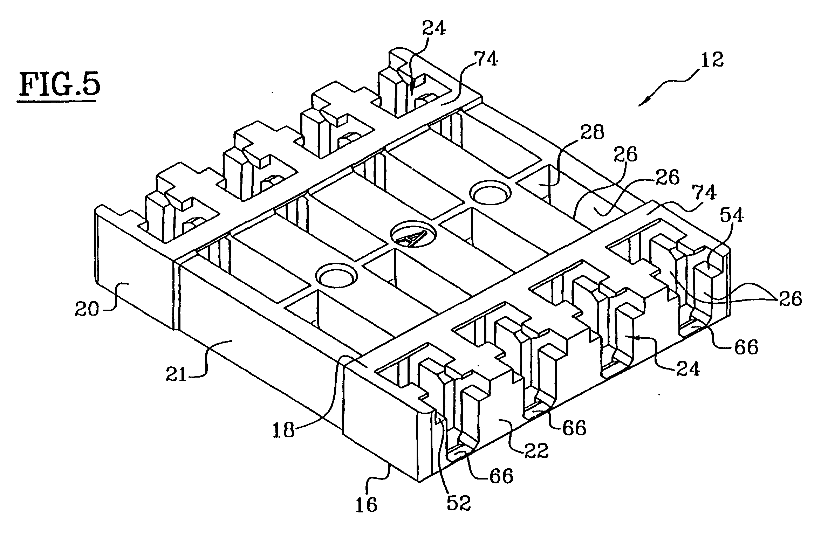

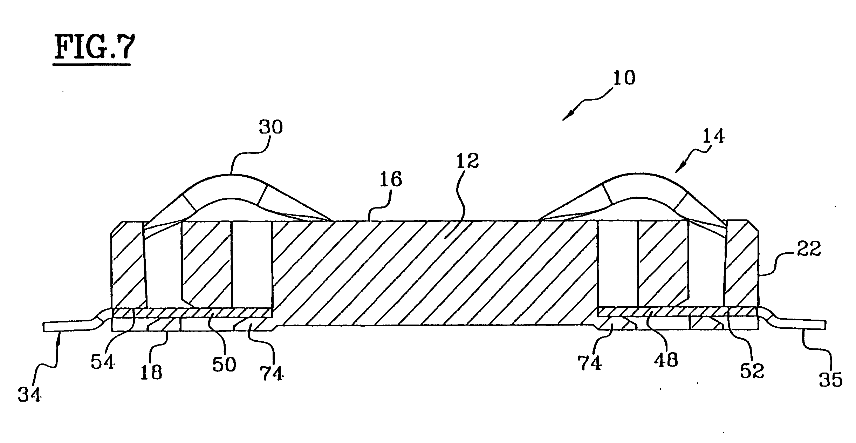

Figures 1 to 7 show a first embodiment of an electrical connector 10 according to the teachings of the invention.

According to the general design known from the document mentioned above, the connector 10 essentially consists of a body made of insulating material 12, produced by moulding, which constitutes a support element forming a contact carrier for a series of contact blades 14 made of conductive material.

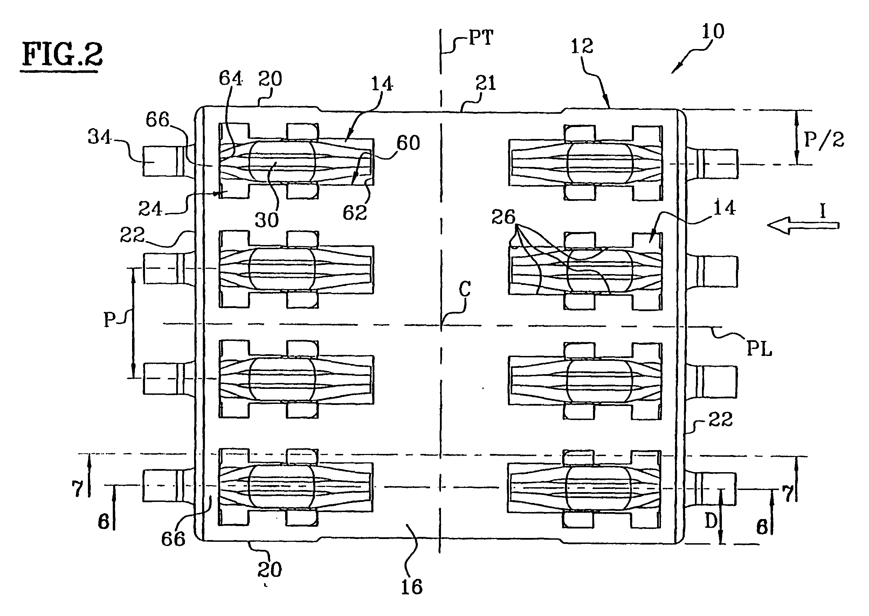

In general, the connector 10 exhibits twin design symmetry with respect to two perpendicular vertical planes of symmetry, the longitudinal plane PL and the transverse plane PT, the lines of which are shown in Figure 2 and the point of intersection C of which constitutes the centre of the connector.

In the embodiment illustrated in Figures 1 to 7, the connector 10 includes four pairs of contact blades 14 aligned longitudinally in pairs.

The connector 10 thus has eight contact blades, each capable of interacting, in a known general manner, with a corresponding conducting pad on a smart card (not shown in the figures).

The insulating body 12 is a piece having the general shape of a flattened rectangular parallelepiped which is bounded by a plane horizontal upper face 16, a horizontal lower face 18, two opposed vertically oriented longitudinal lateral faces 20 and two opposed vertically oriented transverse lateral faces 22.

According to the general design known from document WO-A-95/18421, the insulating body 12 has two series of four housings 24 aligned in pairs.

Each housing 24 runs longitudinally into a corresponding rear transverse face 22 and opens vertically downwards in the lower face 18 and vertically upwards in the upper face 16.

Each housing 24 is overall bounded transversely by two parallel faces 26.

Each housing 24 is bounded longitudinally towards the front by a vertical transverse partition 28.

Each housing 24 is designed to accommodate a contact blade 14 made of an elastically deformable conductive material. Each contact blade 14 constitutes a cut and folded conducting element. Each contact blade 14 extends in the longitudinal direction and in a vertical plane parallel to the longitudinal plane of symmetry PL.

Each contact blade 14 has a first, convex curved contact end 30 which is provided for interacting with a corresponding pad on a smart card which is capable of being inserted longitudinally, in a horizontal direction "I" parallel to the housings 24, into a read-write device (not shown) which is provided with an electrical connector 10.

The curved contact end 30 of each blade 14 is extended longitudinally by an approximately horizontal nose 32, the function of which will be explained below.

More specifically, the nose preferably extends horizontally or in a direction approximately along the extension of the inclined rear longitudinal part 33 of the inclined end.

Each contact blade 14 also has a connecting end 34 which, in the first embodiment illustrated in Figures 1 to 8, extends horizontally and longitudinally towards the outside of the insulating body 12 beyond the corresponding rear transverse face 22 with its lower face 35 which here lies in the plane of the lower face 18 of the insulating body 12.

Each connecting end 34 constitutes a tab allowing each blade 14 to be electrically connected to a conducting track on a printed-circuit board, not illustrated, for example by soldering using the technique of surface mounting.

The curved contact end 30 and the connecting end 34 of each blade 14 are joined together by a hairpin-shaped central linking part 38.

The central linking part 38 of each blade 14 thus has a first branch 40, which extends in an approximately horizontal longitudinal direction parallel to the lower face 18 of the insulating body 12, and a second branch 42 forming an acute angle with the first branch 40, which branches are joined together by the central bend 44 in the form of a U on its side.

The central bend 44 is turned towards the centre of the connector 10, that is to say towards the transverse intermediate partition 28 so as to be located approximately in line with the conducting pads on the chip of the smart card when the latter is in the read-write position.

This geometrical arrangement makes the connector very compact and occupies little space on the printed-circuit card, its longitudinal dimension corresponding to the distance separating the two opposed transverse faces 22, while its transverse dimension corresponds to the distance separating the two opposed longitudinal faces 20.

The sizing of the various components of the connector, and especially of the insulating body 12, is such that the transverse distance D separating a longitudinal lateral face 20 from the vertical mid-plane passing through the immediately adjacent pair of blades 14 is equal to half the standardized pitch P separating two adjacent blades 14 (see Figure 2), i.e. D = P/2. Thus, it is possible to mount adjacent connectors via their lateral faces 20 so that all the contact blades 14 of the connector block thus formed are separated by a constant pitch P.

By virtue of this characteristic, it is possible to group together corresponding insulating bodies with twelve adjacent conducting blades, for example in order to produce three connectors having four pairs of blades, or four connectors having three pairs of blades, so as to insert the twelve blades on each side simultaneously. The assembly costs are thus reduced and the production capacity of the assembly machines may be increased.

In order to guarantee good geometrical precision on the transverse dimension or width of the insulating body 12 separating its longitudinal faces 20, each of them has a central recess 21 in which inflows from the injection gates may be located or in which shaped pieces may be formed.

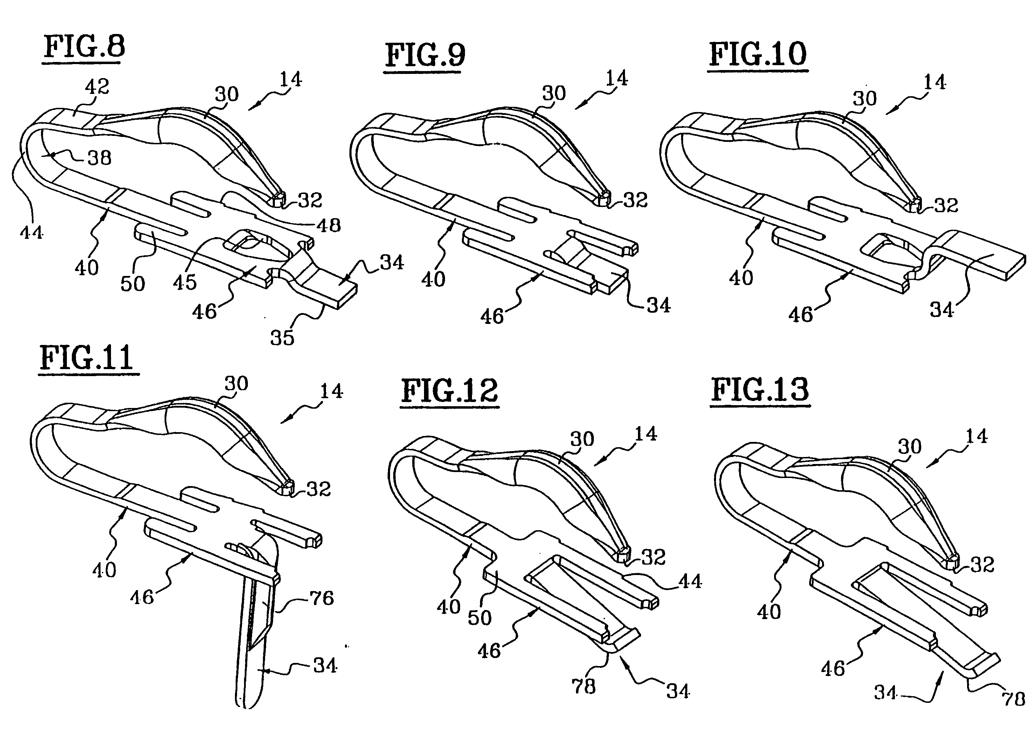

The free end 46 of the first branch 40 of each blade 14 has a greater width than the average width of the blade and it extends longitudinally, vertically in line with the free end in the form of a nose 32 of the curved contact end 30 and has, in a known manner, a hole 45 which the nose 32 can penetrate when the upper branch 42 with the curved end 30 bends vertically downwards. Each widened free end 46 is extended by the connecting tab 34. In a known manner, each free end 46 has, in order to mount the blade 14 and hold it in position in its housing 24, a lateral harpoon 48 and a lateral stabilizing tab 50 which are accommodated in respective complementary lateral slots 52 and 54 in each housing 24. As may be seen in Figure 8, the teeth of the harpoon 47 are formed along a cut longitudinal tab which, like the tab 50, also has the function of stabilizing the contact blade 14 in position in its housing 24.

Each housing 24 runs into the upper face 16 in which it defines, in the top view and as may be seen in Figure 2, a slot 60 which allows passage of the curved contact end 30 of the blade 14 and, partly, passage of the second branch 40 of the central linking part 38.

Each slot 60 is bounded longitudinally towards the front by an edge 62 and, according to the teachings of the invention, it is bounded towards the rear by the rear transverse edge 64 of a crosspiece 66 moulded as one piece with the insulating body 12.

As may be seen in Figure 2, the slots 60 leave free, at the centre of the upper face 16, a solid surface allowing the component to be picked up by suction for the purpose of placing it, using the "pick and place" technique.

Each crosspiece 66 is arranged at the upper part of the housing 24 and at its rear transverse end, that is to say it is flush with the plane of the upper face 16 and with the plane of the corresponding rear transverse face 22.

Thus, at each of the two upper longitudinal end corners of the insulating body 12 there is continuity of material and of profile over the entire transverse width of the insulating body with, preferably, as shown in the figures, a chamfer 68 facilitating the longitudinal insertion of a card.

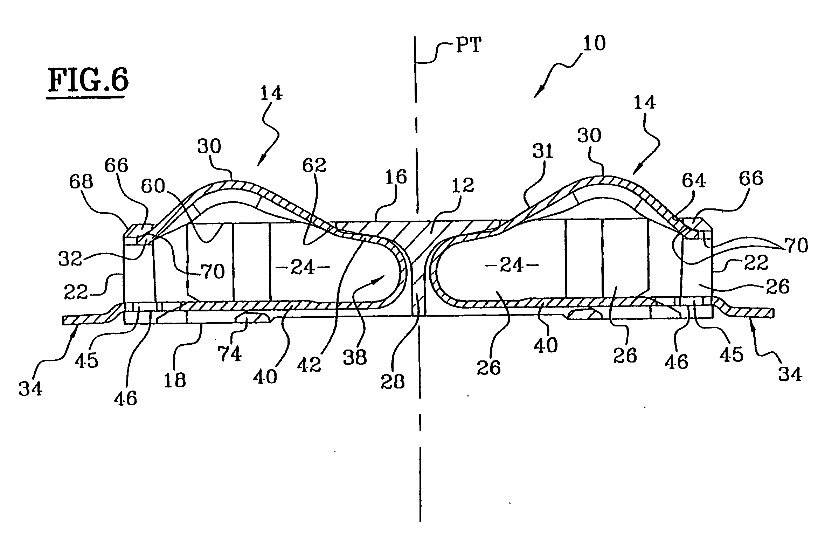

Each crosspiece 66 constitutes a stop by means of its inclined internal lower face 70 against which the nose 32 of the associated contact blade 14 bears elastically so as to define the rest position of the blade 14, as illustrated, for example, in Figure 6.

Thus, the curved end 30 of each contact blade 14 is held in a precise geometrical position, especially with respect to the upper face 16, with a slight elastic prestress.

The crosspieces 66 together contribute to stiffening the insulating body 12, as do also the lower crosspieces 74.

The continuity of material provided by the crosspieces 66 also makes it possible to prevent attempts to pick the contacts 14, 30, the noses 32 of which are protected against any attempt to interfere by inserting longitudinally an object from the rear into the housings 24, whose upper part, which is the only part accessible through the slot for inserting the card into the read-write device, is blocked off by the crosspieces 66.

When fitting each contact blade 14, by longitudinally inserting it, each crosspiece 66 engages with the inclined upper face 31 of the front longitudinal part of the convex curved end 30 in order to cause the elastic displacement of the latter vertically downwards, and causes the nose 32 to penetrate the hole 45.

The elastic flexing of the blade 14 during its insertion is its maximum flexing, that is to say, in normal use of the connector, the successive flexing operations that it will have to undergo because of the insertion and extraction of a card will be of smaller amplitude.

Thus, the internal stresses in the material of which the blade 14 is composed, resulting especially from its initial shaping by bending, will have no tendency subsequently to cause "relaxation" phenomena (resulting from thermal or fatigue ageing) in the blade causing, by a shape-memory effect, it to partially resume its shape before bending.

As may be seen especially in Figure 6, the total length of the insulating body 12 is reduced to a minimum, that is to say its rear transverse faces 22 are almost adjacent to the noses 32.

The design according to the invention, with stop crosspieces 66 moulded as one piece with the insulating body 12, makes it possible to retain all the advantages inherent in longitudinal insertion of the contact blades 14, advantages which are known from the above-mentioned document, while reducing the number of components of the connector and its dimensions, especially its height and its length, by dispensing with the lid provided previously, and also by allowing the stiffness of the connector 10 to be increased, that is to say thus ensuring positive retention of the insulating body 12 of the connector 10 by means of its contact blades 14 when the connector is soldered via the connecting tabs 34 to a printed-circuit board.

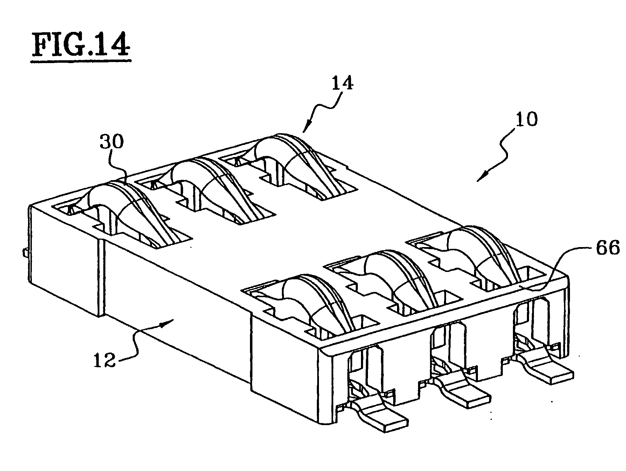

In the embodiment illustrated in Figure 14, the electrical connector 10 differs only by the number of contact blades 14 which, in this case, is six, that is to say the connector 10 has three pairs of blades 14.

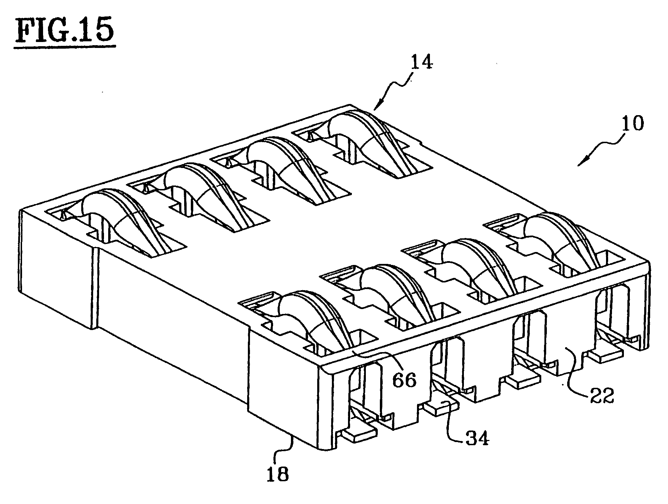

In the embodiment illustrated in Figure 15, it may be seen that the connecting tabs 34 are short, that is to say the contact blades 14 are of the type illustrated in Figure 9. The connecting tabs 34 are thus located entirely inside the connector 10, the maximum length dimension of which corresponds to the distance separating its opposed transverse faces 22. However, the tabs 34 are visible and accessible from the outside by an infrared solder-reflow beam.

Because of the downward vertical offset of the connecting tabs 34 with respect to the branch 40, and because of the fact that the connecting tabs 34 are then located vertically in line with the noses 32, it is not necessary to provide a hole 45, the clearance offered by the tabs 34 facing the noses 32 allowing the contact blades 14 to flex while they are being inserted longitudinally into the housings 24. However, without departing from the scope of the invention, it would be possible to provide a hole 45 in each short connecting tab 34, such a hole also helping to improve the fastening, by soldering, of each connecting tab 34 to the printed-circuit board because of the penetration by the solder material into the hole 45 then provided.

Figure 10 shows an embodiment in which, if it is compared with that illustrated in Figure 8, the connecting tab 34 of the blade 14 extends horizontally in a plane offset vertically upward with respect to the lower branch 40, 46.

The embodiment of the contact blades 14 which is illustrated in Figure 11 is of the type to be inserted into a hole in the printed-circuit board, that is to say its connecting tab 34 extends vertically downwards in a plane perpendicular to the branch 40, 46, the vertically oriented connecting tab 34 is strengthened by a rib 76.

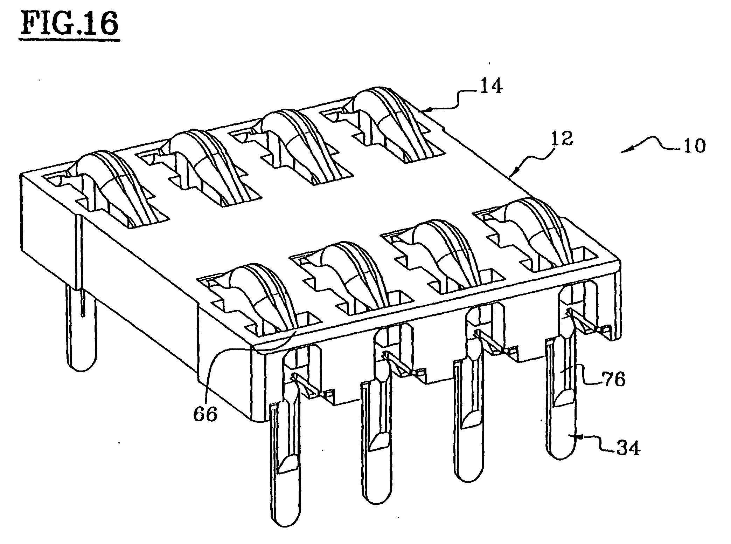

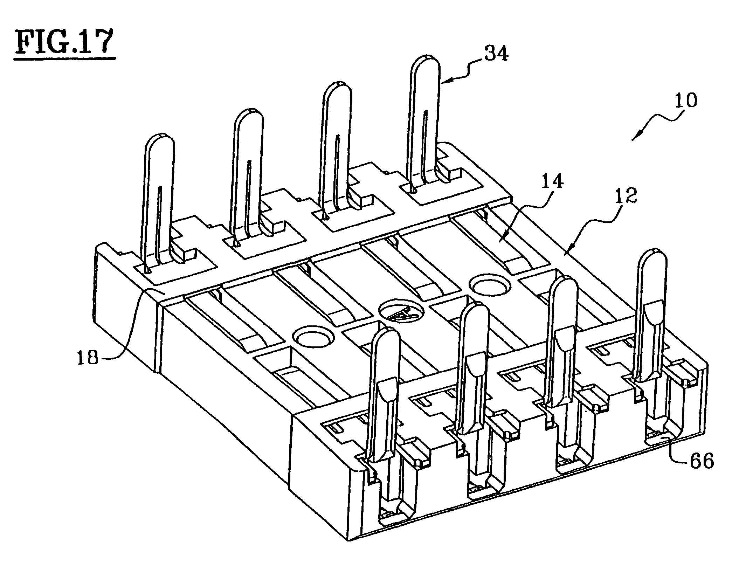

A connector 10 fitted with such insertable blades 14 is shown in Figures 16 and 17, the design of the connector 10 and especially of its insulating body 12, being, moreover, in every way identical to that of the connector shown especially in Figures 1 to 7.

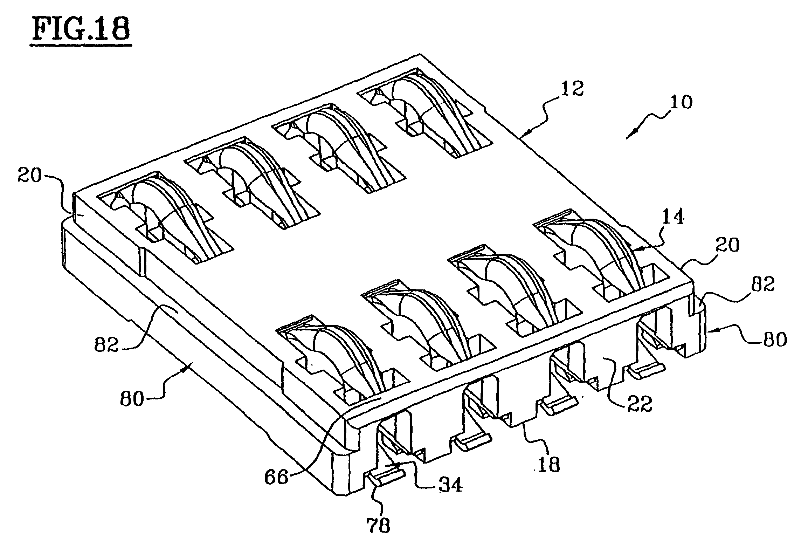

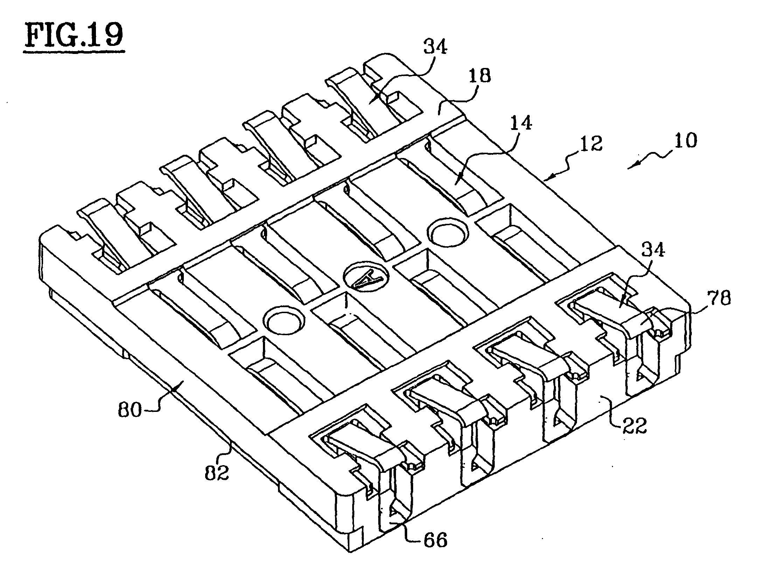

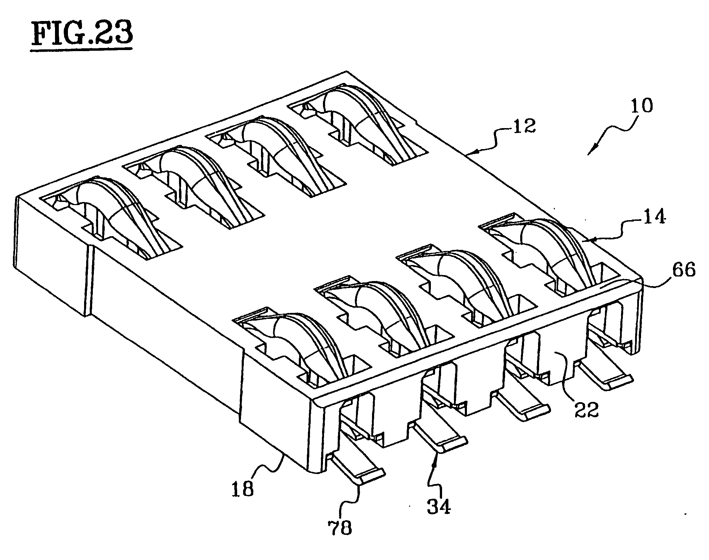

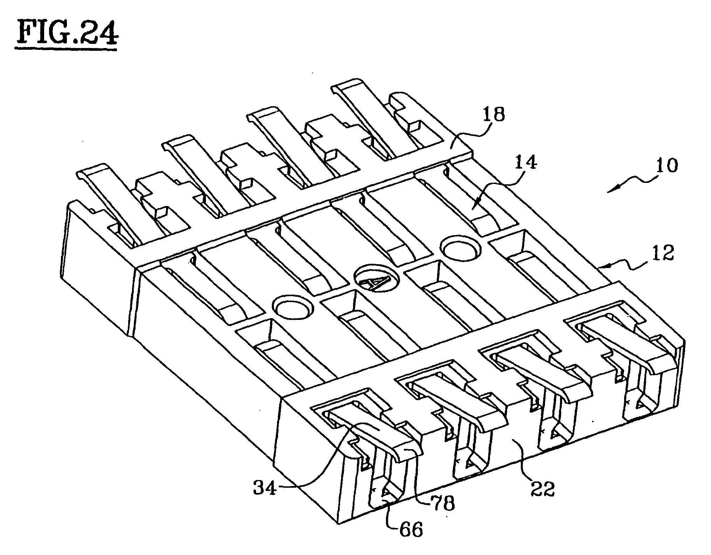

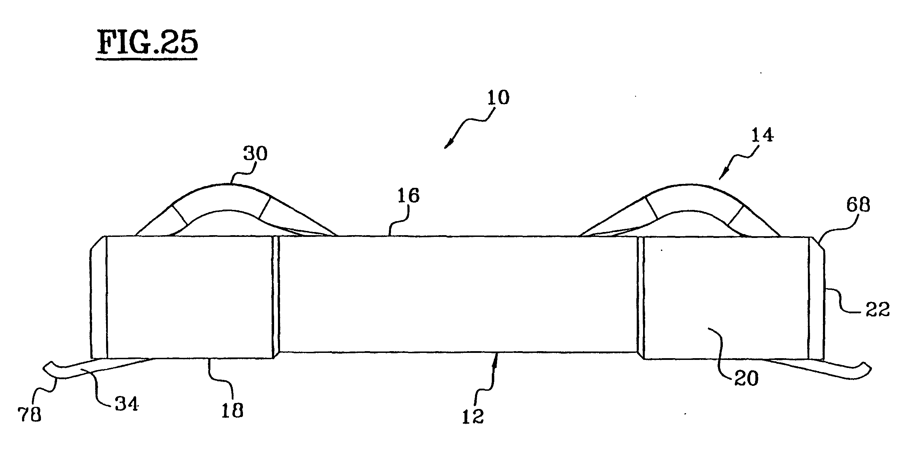

Figure 12 shows another design embodiment of the contact blade 14 intended to be fitted into the connector 10 according to the teachings of the invention, which here is a solderless contact blade, that is to say its connecting tab 34 is in the form of an elastically deformable tab which extends vertically downwards, making an acute angle with respect to the horizontal plane of the branch 40, 46, with its curved rear free end 78 having its convexity facing vertically downwards. In the embodiment illustrated in Figure 12, each connecting blade 34, which bears elastically on a conducting track of a printed-circuit board, is short, that is to say, as may be seen in Figures 18 and 19, the blades are located entirely inside the insulating body 12 of the connector 10, whereas, in the embodiment illustrated in Figure 13, the connecting tabs 34 are long in order to exhibit greater elasticity and, moreover, therefore projecting longitudinally beyond the rear transverse faces 22, as may be seen in Figures 23 to 25.

These solderless configurations also have the advantage of fully retaining the "cantilever" function of the hairpin-shaped blade which exhibits very great elasticity in a very small volume.

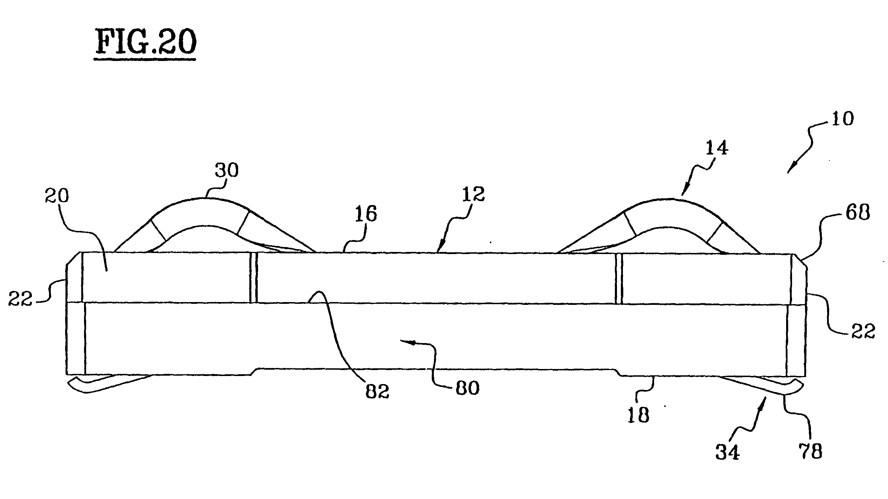

In both cases, that is to say those in which the resilient connecting tabs 34 are short or long, they initially extend vertically downwards beyond the lower plane face 18 of the insulating body 12 (see Figures 18 to 20 and 23 to 25) and, when the connector 10 is in place on the printed-circuit board, by its lower horizontal face 18 bearing on the upper face of the printed-circuit board, the resilient connecting tabs 34 are elastically deformed by flexing vertically upwards inside the housings 24, the maximum flexing being guaranteed by the lower face of the insulating body which comes into contact with the upper face of the printed-circuit board.

The long resilient connecting tabs 34 also allow electrical test operations to be carried out.

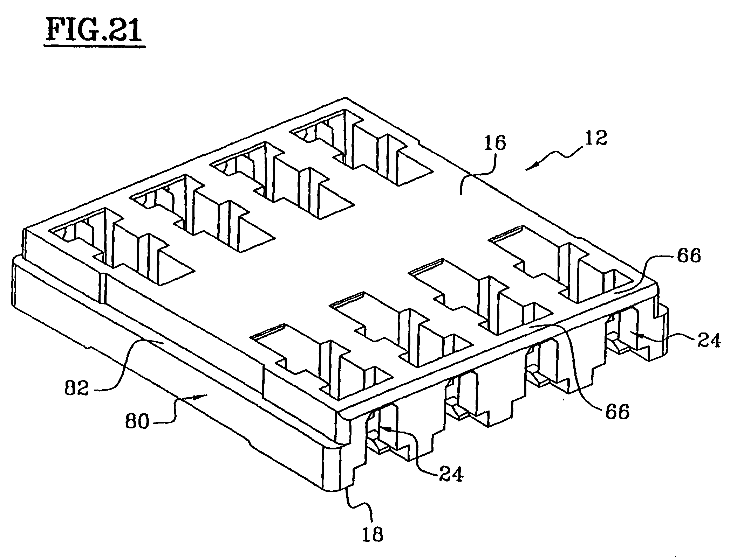

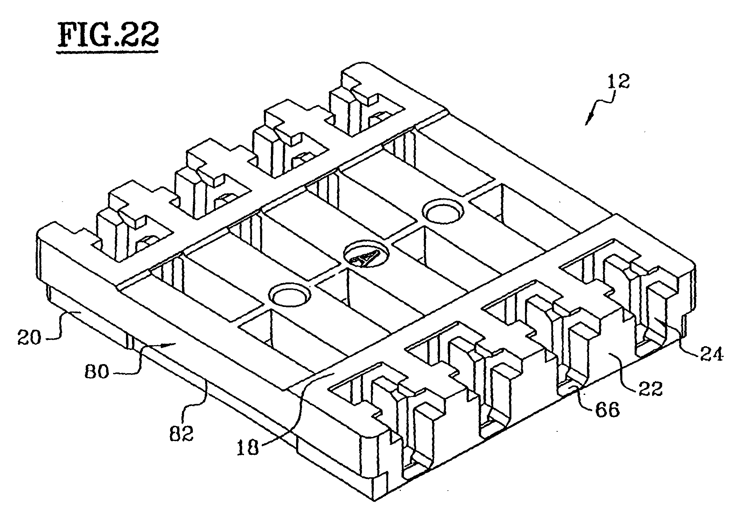

In order to be able to press the connector 10 vertically downwards, so that its lower face 18 bears against the facing upper face of the printed-circuit board, against the elastic force tending to lift it and which is applied by the resilient connecting tabs 34, it is possible to provide bearing rims or excrescences on the insulating body 12. A first example of an embodiment of these rims is illustrated in Figures 18 to 22.

In this example, each of the longitudinal lateral faces 20 of the insulating body 12 is provided, in its lower part, with a longitudinal rim 80 which extends over the entire length of the insulating body 12 and which is bounded vertically upwards by a horizontal upper bearing facet 82 with which a complementary part, not shown, of a casing or equivalent, belonging for example to the read-write device or to the equipment provided with the connector 10, engages.

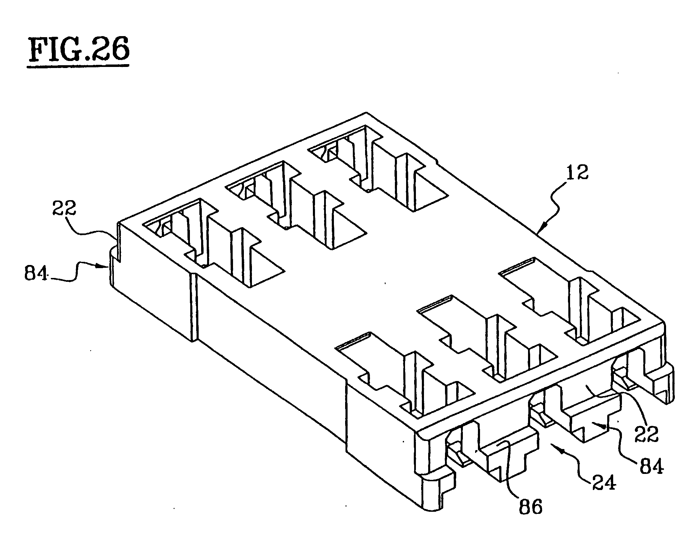

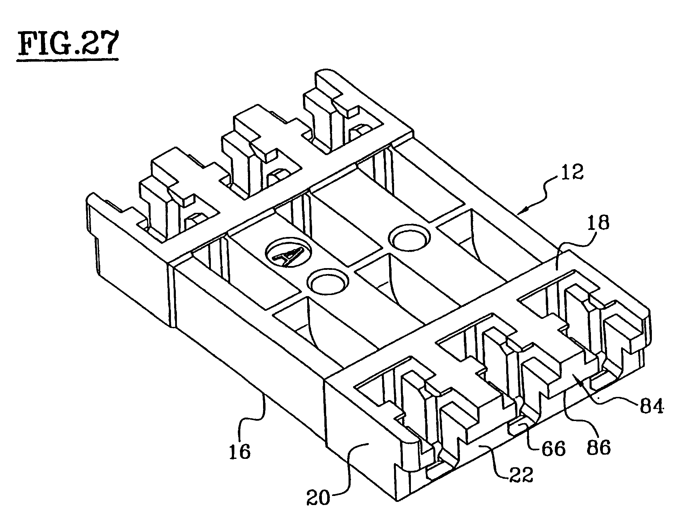

In the embodiment illustrated in Figures 26 and 27, the bearing rims here are transverse rims 84 which are formed so as to protrude from each of the opposed transverse lateral faces 22 of the insulating body 12, each rim defining a discontinuous upper bearing facet 86. This design embodiment of the bearing rims is illustrated in the case of an insulating body 12 for a connector with three pairs of contact blades. The rims 84 arranged on the transverse lateral faces 22 make it possible to clear the longitudinal lateral faces 20 and to retain the advantages mentioned above with reference to the transverse width of the insulating body.

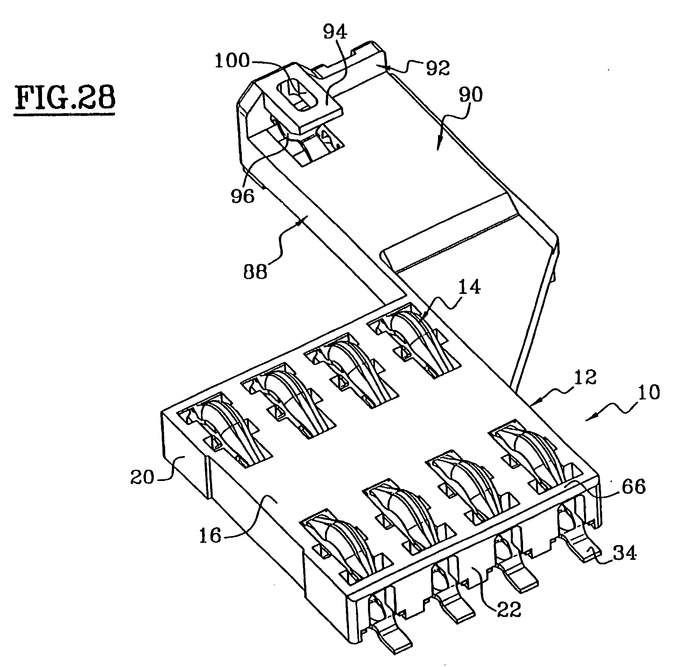

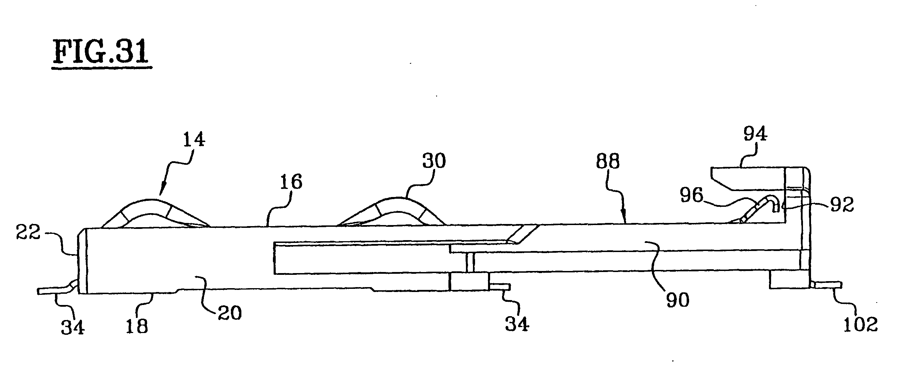

In the embodiment illustrated in Figures 28 to 31, the electrical connector 10 is fitted, according to a general arrangement known from document WO-A-95/33243, with a switch 88 for detecting the presence and the end-of-insertion-travel of a card in the active position. The switch 88 is integrated into the connector 10, being located here, for example, on the right when considering Figure 28, that is to say its body 90 is moulded with the insulating body 12 and it has a stop wall 92 for the front transverse edge of the card, as well as a roof 94 for pressing on the card so that it acts on the actuating pedal 96 of the switch 88, the roof 94 having a hole 100 for testing the switch 88 by acting on the pedal 96 by means of an object introduced vertically through the hole 100.

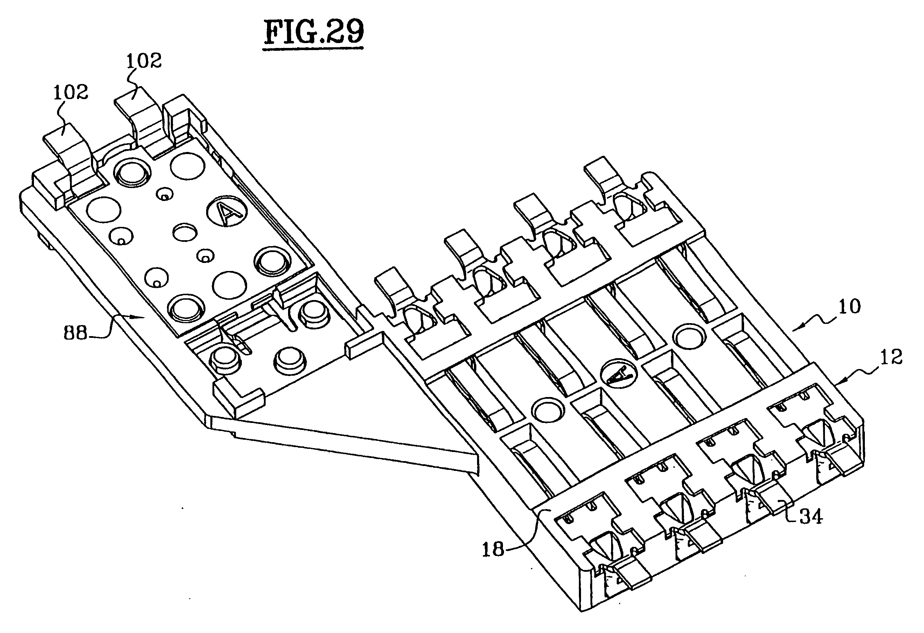

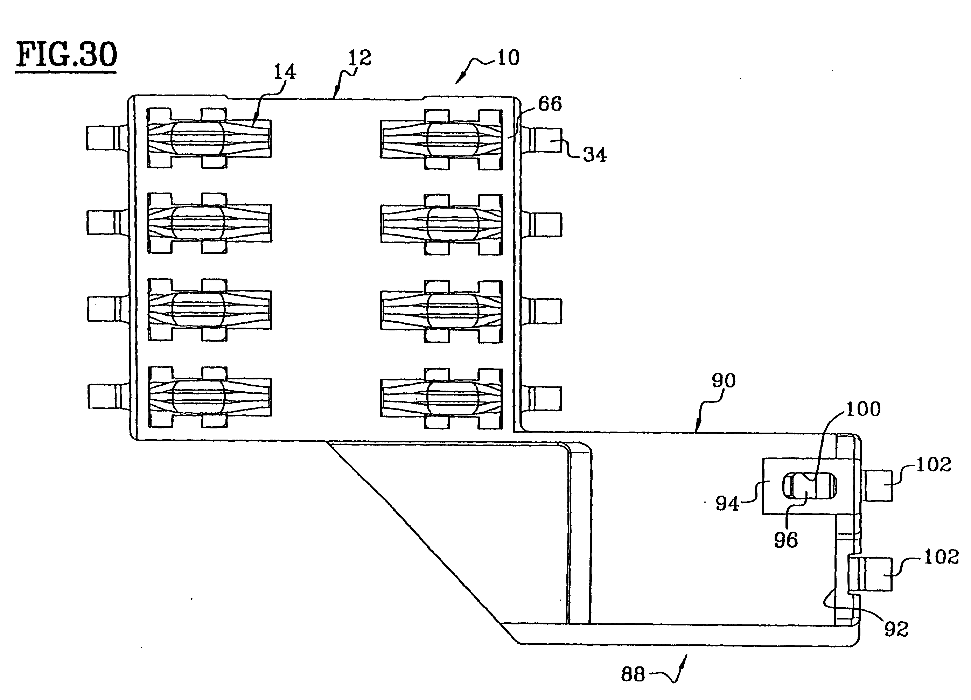

The electrical connector 10 is everywhere similar to that illustrated in Figures 1 to 7 and the connecting tabs 102 of the switch 88 are of the same type as the connecting tabs 34 of the electrical connector 10, these here being oriented longitudinally towards the outside of the switch, as may be seen in Figures 29 and 30.

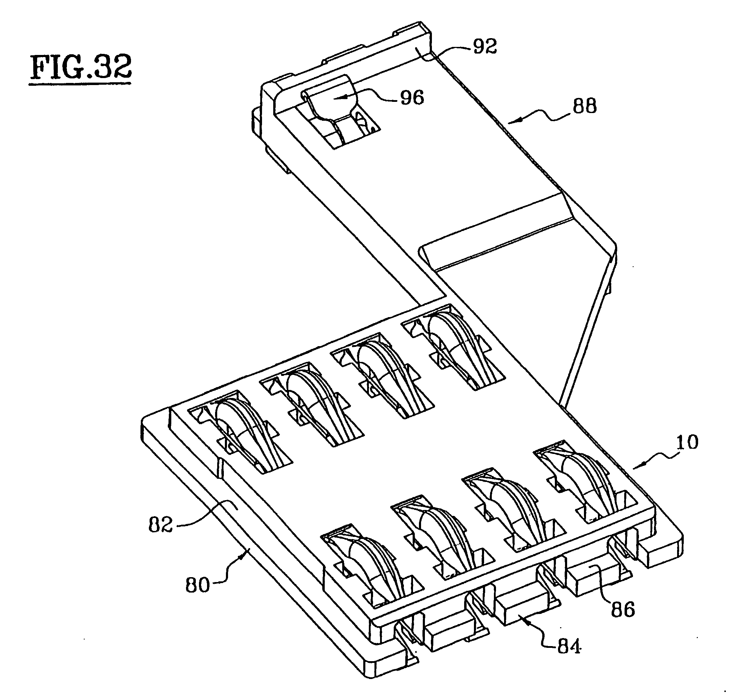

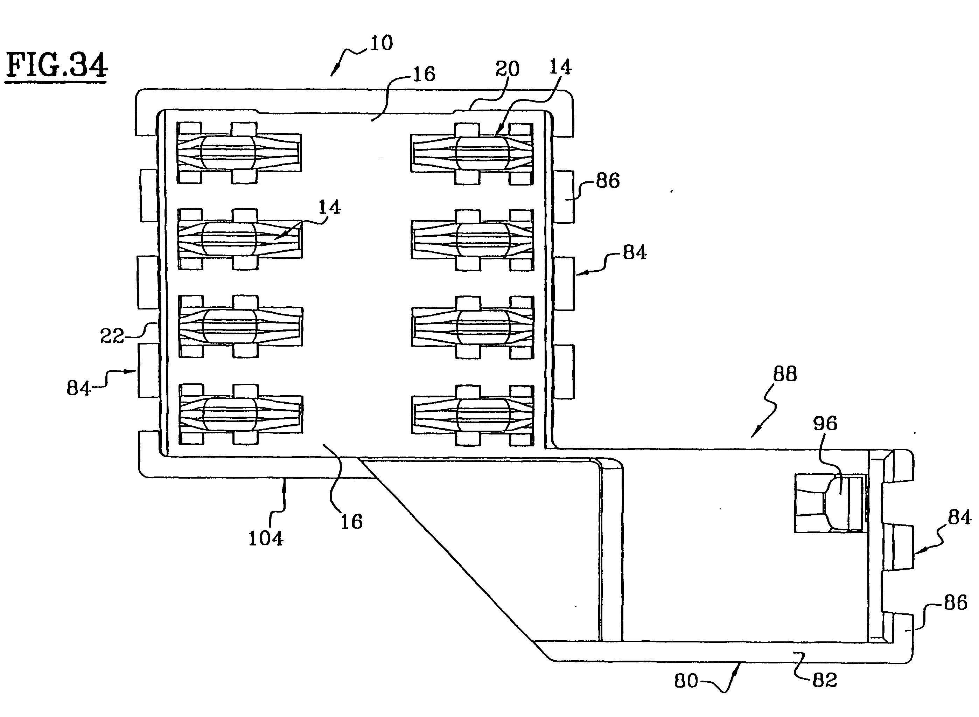

In the embodiment illustrated in Figures 32 to 35, the switch 88 does not have a roof 94 and the connector 10 has longitudinal rims 80 and transverse rims 84, the connecting tabs 34 of the connector 10 and the connecting tabs 102 of the switch 88 being elastically deformable solderless connecting tabs of the type of those described above.

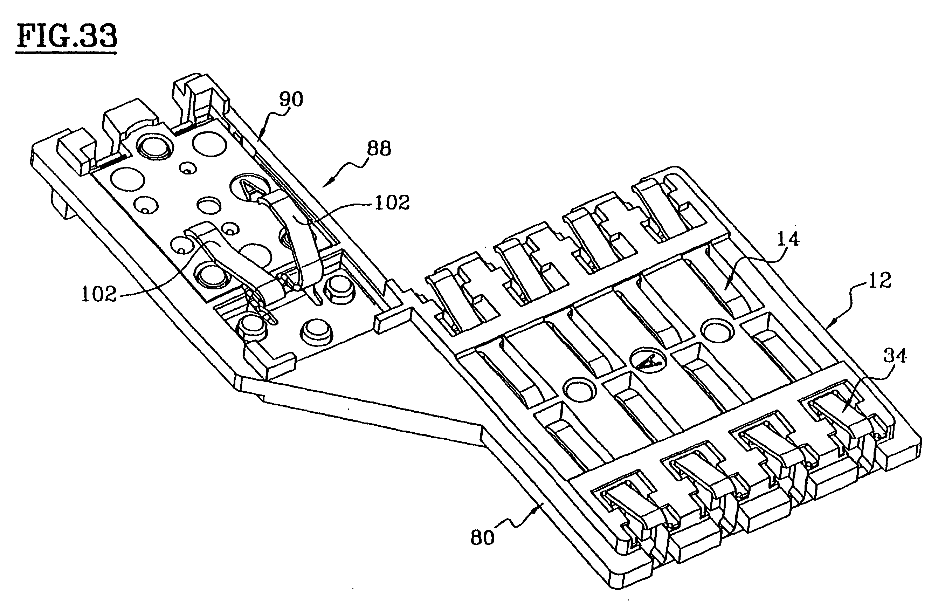

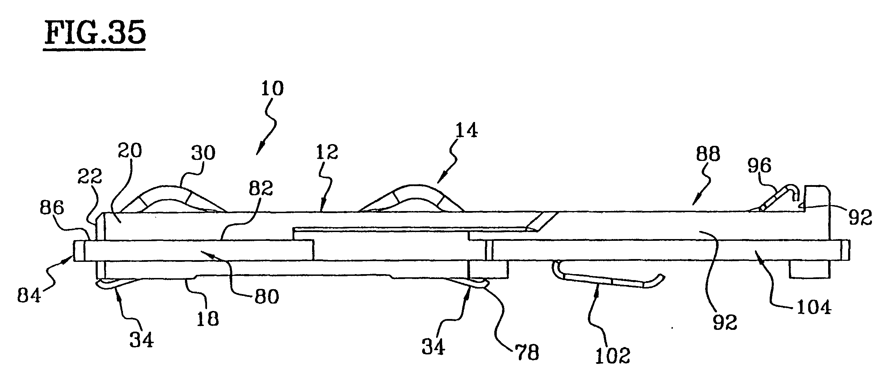

Figures 33 and 35 also show that the resilient connecting tabs 102 of the switch 88 are located longitudinally inside the perimeter of the switch 88.

In order to press the switch 88 vertically downwards, Figure 33 shows that one of the longitudinal rims 80 of the insulating body 12 also extends along the corresponding lateral face of the insulating body 90 of the switch 88 in the form of a longitudinal rim 104.

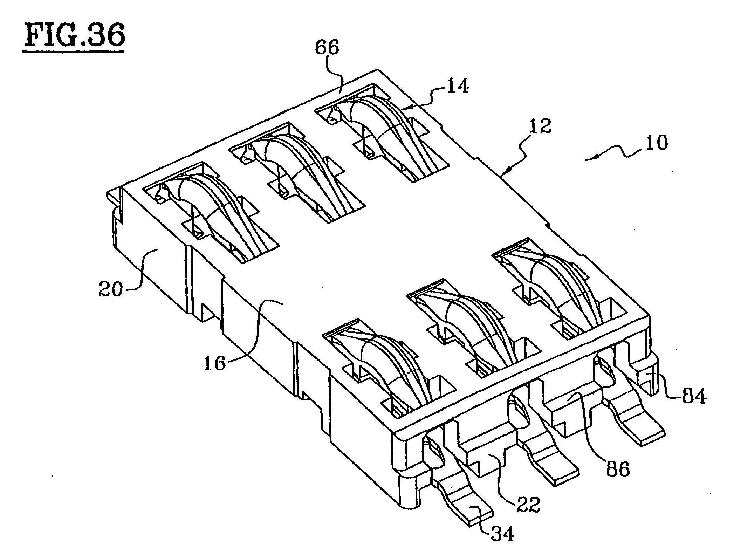

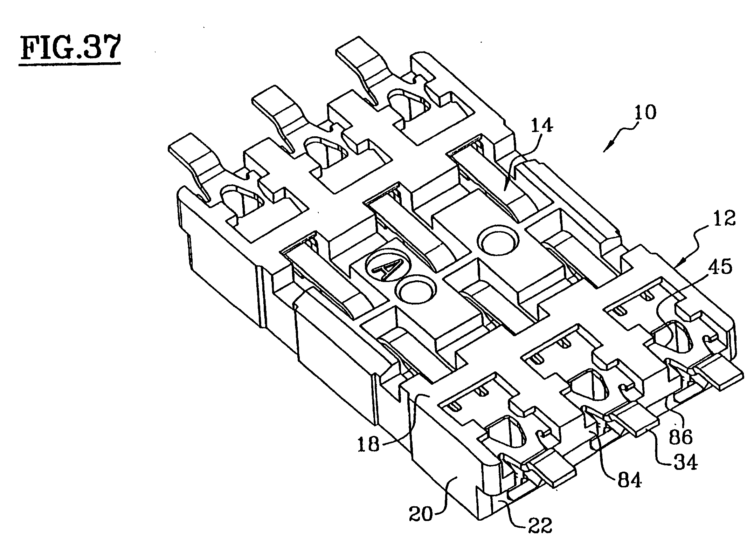

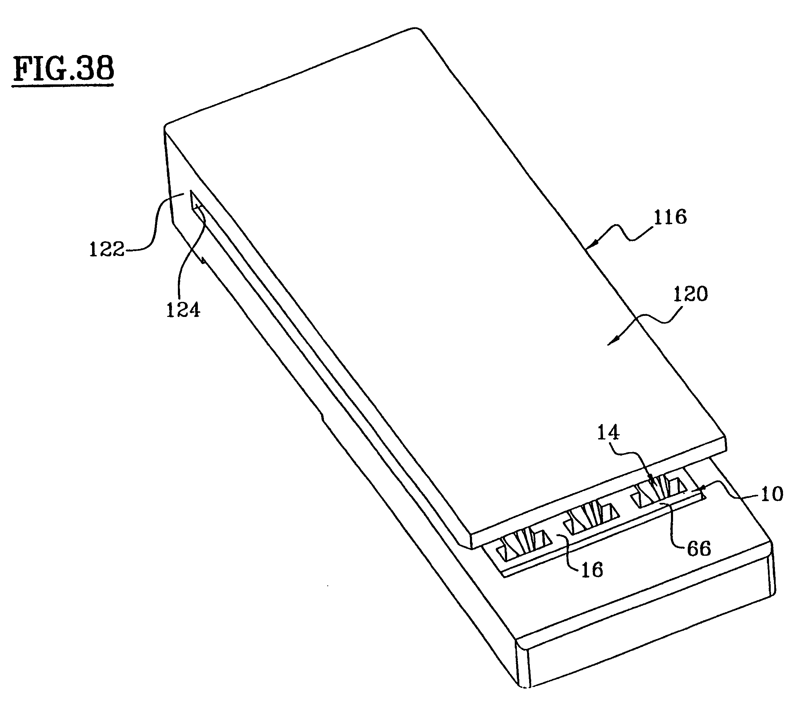

In the embodiment illustrated in Figures 36 and 37, the opposed longitudinal lateral faces 20 are each profiled so as to allow the connector 10 to be mounted by fitting into a complementary profiled casing element which is a complementary accessory attached to the connector 10 in order to form a whole unit, of the type illustrated in Figure 38, or which is part of the equipment which receives the connector.

The mounting profiles consist of notches 106 formed in the lower face of the insulating body 12 and by lugs 108 (see Figure 38 and the following figures) forming part of the casing, which are then housed elastically in the chamfered notches 106.

The lugs 108 thus hold the insulating body 12 vertically downwards with the upper facets 86 of the transverse rims 84 bearing vertically upwards against facing lower facets 112 of rims 114 of the casing element.

As may be seen in Figure 38 and the following figures, the electrical connector 10 may be mounted in an attached plastic element forming a casing 116 which has, in its lower face 117, an open housing 118 of complementary dimensions to those of the connector 10, which may be fitted vertically upwards into it, as explained previously.

The casing 116 provides the functions of guiding and of upward vertical retention of a card by means of its upper plate 120 which forms a large roof and is joined to the lower part of the casing by a vertical wall 122 defining a vertical stop face 124 for the front transverse edge of the card and a slot for inserting the card.

According to an embodiment which is not shown in the figures, the accessory 116 may incorporate a switch for detecting the presence and the insertion of the card.

The component 116 may be provided so as to form with the connector 10 a whole unit or else may belong, with a part, to the equipment of which it is fitted onto the connector 10 fixed beforehand to the printed-circuit board.

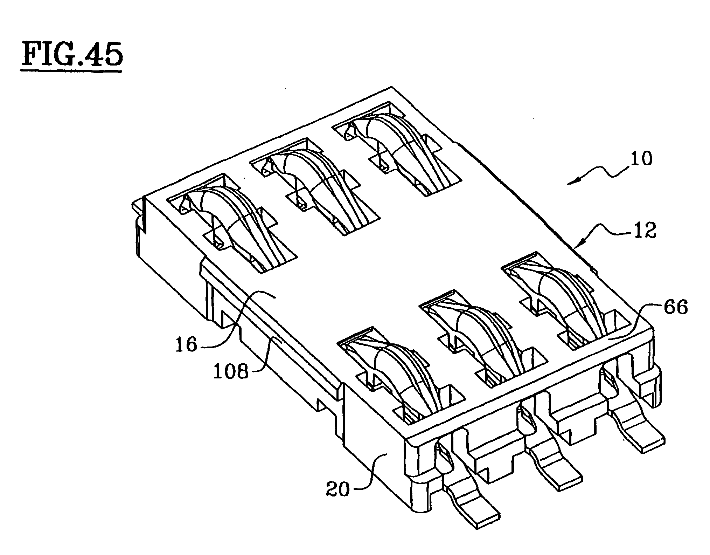

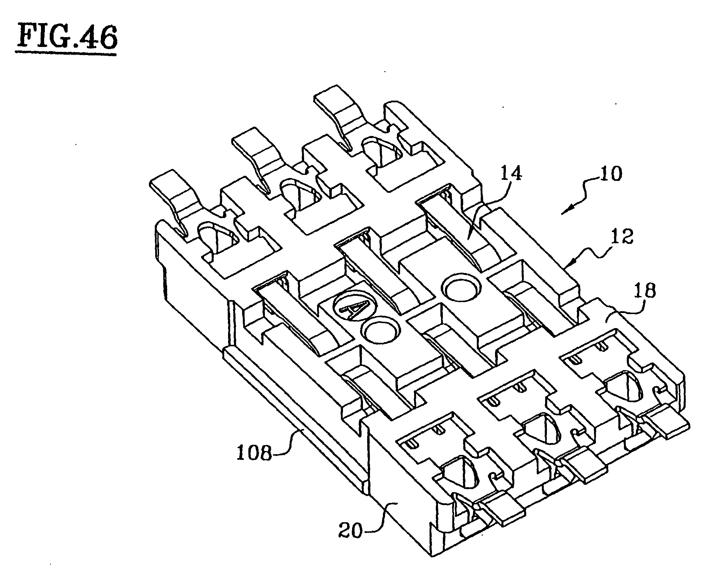

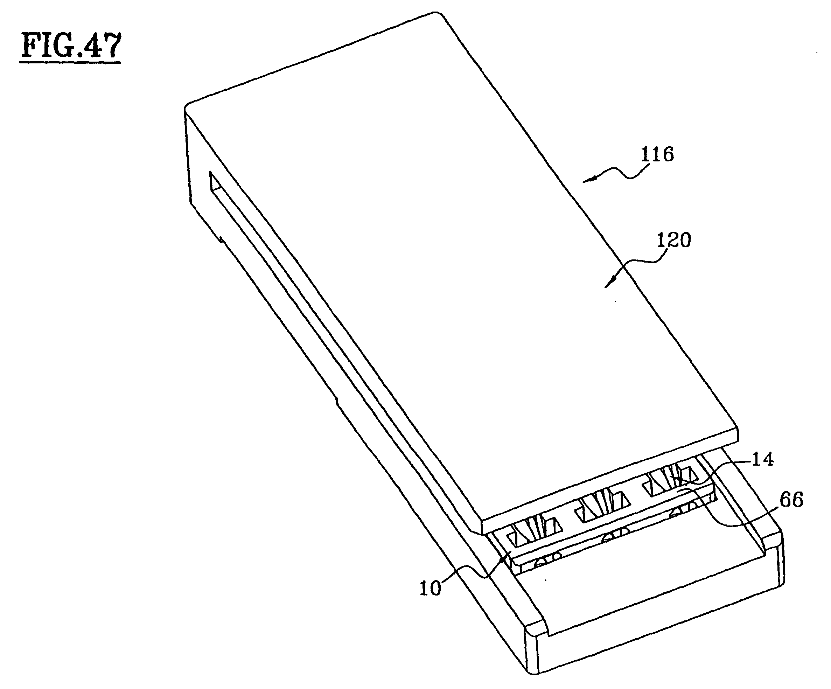

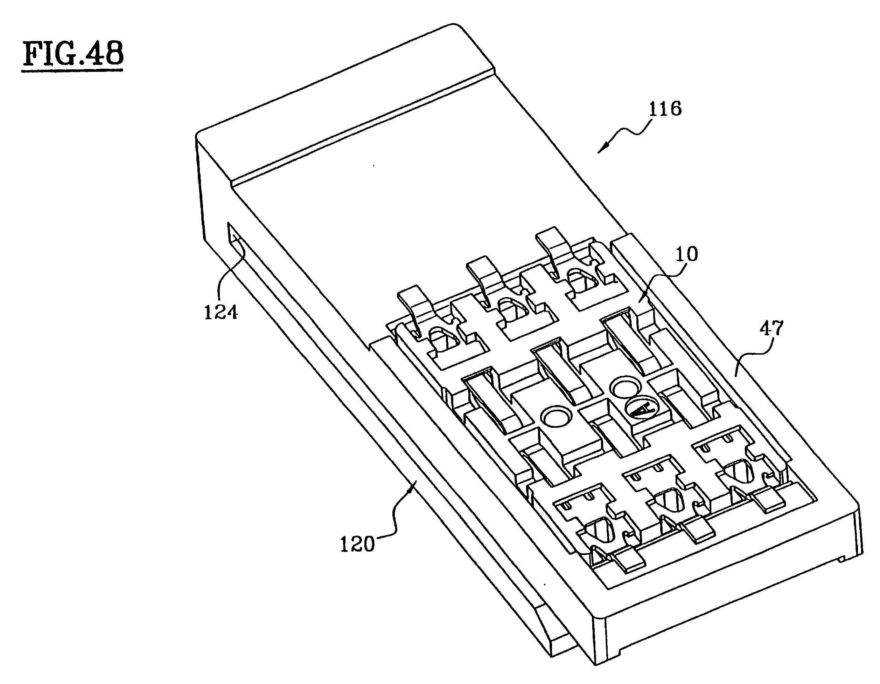

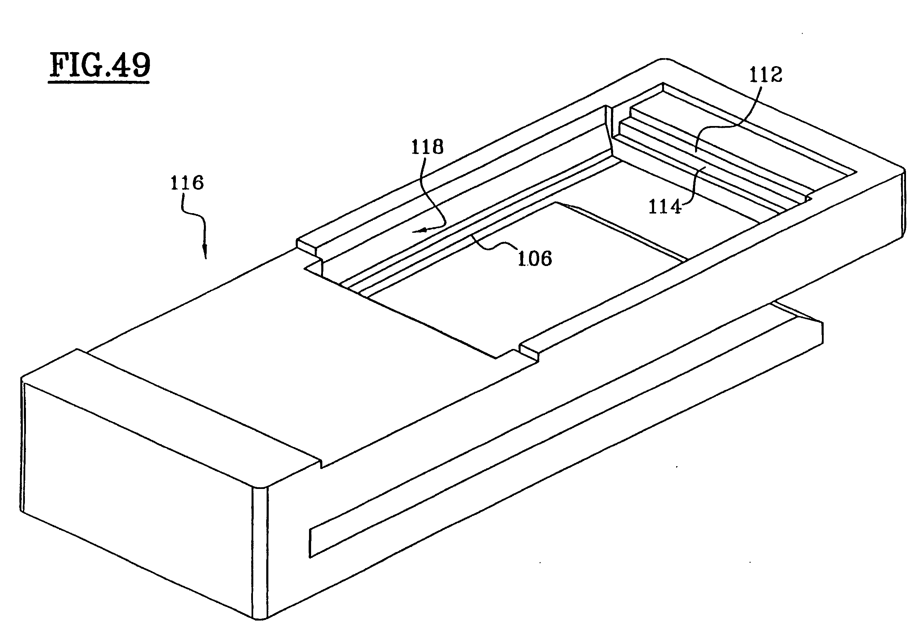

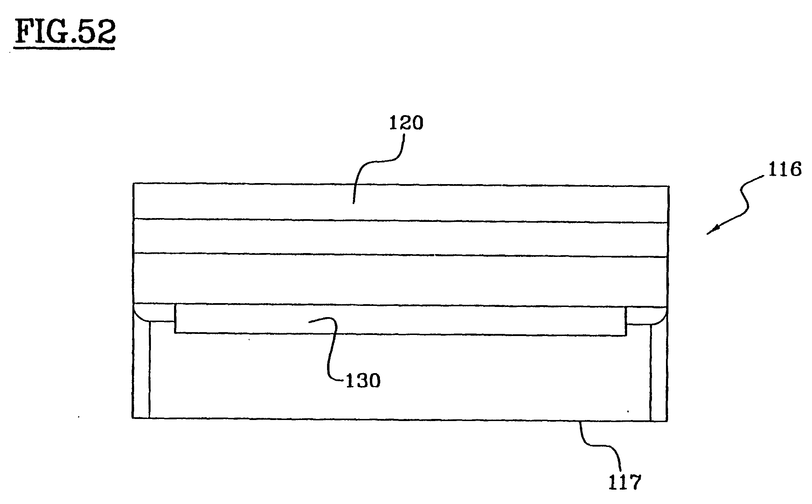

In the embodiment illustrated in Figures 45 to 52, the lugs 108 are formed so as to protrude from the longitudinal lateral faces 20 of the insulating body 12 and are adjacent to the upper face 16, while notches or indentations 106 are formed in the open housing 118 of the equipment 116.

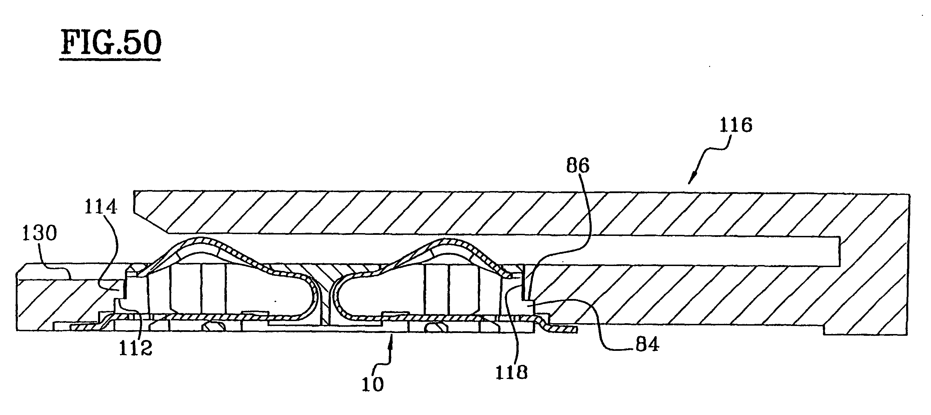

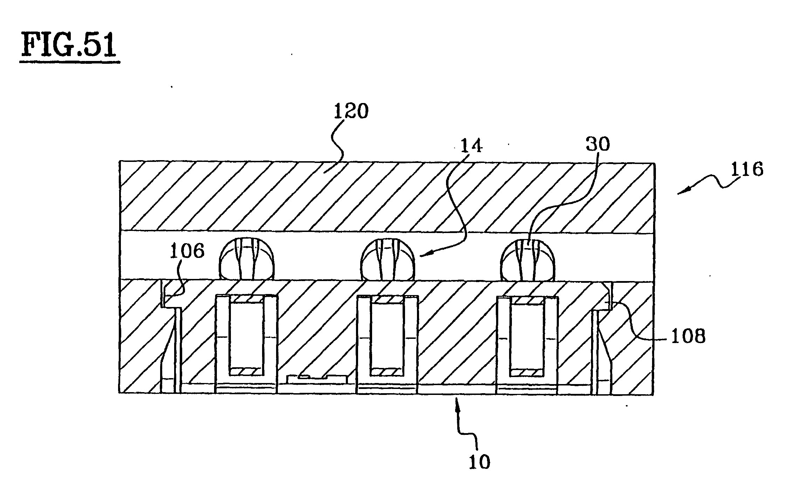

As may be seen by comparing Figures 50 and 51, the connector 10 is held vertically in place in the open housing 118, on the one hand, because of the mutual bearing of the facets 86 of the connector 10 and 112 of the accessory 116 and, on the other hand, because of the engagement of the lugs 108 of the connector 10 in the notches 106 of the accessory 116.

In order to mould the notches, a flat recess 130 is provided in the body of the equipment 116.

## Claims

1. Electrical connector (10) for the connection of a smart card having a plurality of aligned electrical contact pads on one of its main faces, the connector having a body made of insulating material (12) forming a contact carrier, the said body having a horizontal upper plane face (16) parallel to the longitudinal direction of insertion (I) of the card into a read-write device, and a plurality of electrical conductors (14) in the form of elastically deformable blades (14, 30) which are placed parallel to the direction of insertion (I) of the card, each contact blade (14) comprising :
- a curved first end (30) for contact with a corresponding pad on the card, the said first end projecting out of the plane of the upper plane face (16) of the insulating body (12) and being extended by a nose (32) which is elastically pressed, vertically upwards, so as to bear against a stop surface ;
- a central portion (38, 40) for linking the blade (14) to the insulating body (12) ; and
- a second end (34) for connecting the blade (14) to a processing circuit of the read-write device ;
and of the type in which :
- the insulating body (12) is bounded longitudinally by at least one rear vertical plane transverse face (22), into which face (22) housings (24) run longitudinally,
- each housing (24) accommodates a contact blade (14),
- each of said housings (24) runs longitudinally and opens into said rear transverse face (22), for permitting fitting thereinto of the accommodated contact blade by insertion longitudinally from the rear towards the front,
- and each housing is open (60) in the plane upper face (16) of the insulating body (12) for passage of the said curved contact end (30),
**characterized in that** the said stop surface belongs to a crosspiece (66) moulded as one piece with the insulating body (12).

2. Connector according to the previous claim, **characterized in that** the said stop surface consists of the lower face (70) of the crosspiece (66) and **in that** the upper face of the crosspiece (66) is a portion of the plane upper face of the insulating body.

3. Connector according to either of the preceding claims, **characterized in that** the crosspiece (66) is adjacent to the said transverse lateral face (22) and **in that** the crosspiece (66) extends in line with the said housing (24).

4. Connector according to any one of the preceding claims, **characterized in that** each housing (24) runs vertically downwards into a horizontal plane lower face (18) of the insulating body (12).

5. Connector according to any one of the preceding claims, **characterized in that** the central linking part (38) of each blade (14) is a hairpin-shaped bent-over part extending approximately parallel to the upper plane face (16) of the insulating body (12), comprising a first branch (40) of which the free end is extended by the connecting end (34) of the blade (14), which first branch includes means (47) for fastening the blade (14) to the insulating body (12), and comprising a second branch (42) of which the free end is extended by the curved contact end (30) of the blade (14), the first (40) and second (42) branches being joined together by a central U-shaped bend (38) directed towards the centre of the connector.

6. Electrical connector according to Claim 5, **characterized in that** the free end (46) of the first branch (40) of the central linking part (38) of the blade (14) is embedded in a housing in the insulating body (12).

7. Electrical connector according to Claim 6, **characterized in that** the curved contact end (30) of each blade (14) extends approximately in line with the embedded free end (46) of the first branch (40) of the central linking part of the blade (14).

8. Electrical connector according to any one of Claims 4 to 7, **characterized in that** the curved contact end (30) is located longitudinally between the said central bend and the connecting end (34).

9. Connector according to any one of Claims 5 to 8 taken in combination with either of Claims 3 and 4, **characterized in that** the connecting end (34) of each blade (14) projects longitudinally rearwards beyond the said rear transverse face (22).

10. Connector according to any one of Claims 5 to 8 taken in combination with either of Claims 3 and 4, **characterized in that** the connecting end (34) of each blade (14) is located longitudinally to the front of the said rear transverse face (22).

11. Electrical connector according to either of Claims 9 and 10, **characterized in that** the connecting end (34) of each blade (14) extends horizontally.

12. Electrical connector according to either of Claims 9 and 10, **characterized in that** the connecting end (34) of each blade (14) extends vertically downwards.

13. Electrical connector according to either of Claims 9 and 10, **characterized in that** the connecting end (34) of each blade (14) extends downwards below the lower plane face (18) of the insulating body (12), making an acute angle with the plane of this face, and **in that** the connecting end (34, 78) is elastically deformable.

14. Connector according to any one of Claims 8 to 12, **characterized in that** the connecting end (34) is visible from outside the insulating body (12).

15. Electrical connector according to any one of the preceding claims, **characterized in that** it includes an integrated electrical switch for detecting the longitudinal position of the card with respect to the insulating body (12).

16. Connector according to any one of the preceding claims, **characterized in that** the insulating body (12) is bounded by longitudinally oriented vertical lateral faces (20) and transversely oriented vertical lateral faces (22), and by a horizontal plane lower face (18), and **in that** at least one of the pairs of opposed lateral faces each has a lower rim (80, 84) which projects outwards from the insulating body (12) and which is bounded vertically upwards by a horizontal upper facet (82, 86), especially for another component (116) to bear on this facet.

17. Connector according to any one of the preceding claims, **characterized in that** the transverse distance (D) separating a longitudinal lateral face (20) from the vertical mid-plane passing through the immediately adjacent pair of blades (14) is equal to half the standardized pitch (P) separating two adjacent blades (14).

18. Connector according to any one of the preceding claims, **characterized in that** the insulating body (12) includes profiles (108) allowing it to be fitted into a complementary accessory (116).

## Patentansprüche

1. Elektrischer Steckverbinder (10) für die Verbindung mit einer Smart Card, die auf einer ihrer Hauptflächen eine Mehrzahl von ausgerichteten, elektrischen Leiterplättchen aufweist, wobei der Steckverbinder einen Strukturkörper umfasst, der aus einem isolierenden Material (12) hergestellt ist und einen Kontaktträger ausbildet, wobei der Isolierkörper eine horizontale, obere Planfläche (16) besitzt, die in Bezug auf die Längsrichtung der Karteneinführung (I) in eine Lese-/Schreibvorrichtung parallel verläuft, und eine Mehrzahl von elektrischen Leitern (14) in Form von elastisch verformbaren Kontaktzungen (14, 30) umfasst, die in Bezug auf die Einführrichtung (I) der Karte parallel positioniert sind, wobei jede Kontaktzunge folgendes aufweist:
- ein gewölbtes, erstes Ende (30) für den Kontakt mit einem korrespondierenden Leiterplättchen auf der Karte, wobei das erste Ende aus der Ebene der oberen Planfläche (16) des Isolierträgers (12) herausragt und sich durch eine Ansatznase (32) erweitert, die - vertikal nach oben - rückfedernd gepresst wird, um so gegen eine Anschlagsfläche aufzulagern;
- ein mittleres Abschnittsteil (38, 40) für das Verbinden der Kontaktzunge (14) mit dem Isolierträger (12), und
- ein zweites Ende (34) für das Verbinden der Kontaktzunge (14) mit einer Aufbereitungsschaltung in der Lese-/Schreibvorrichtung;
und wobei der Steckverbinder aus einem Typ besteht, in dem:
- der Isolierträger (12) von mindestens einer hinteren, vertikal gerichteten Querseitenfläche (22) der Länge nach begrenzt ist, wobei in der Querseitenfläche (22) die Gehäuseeinschnitte (24) längsgerichtet verlaufen;
- jeder Gehäuseeinschnitt (24) eine Kontaktzunge (14) aufnimmt,
- jeder der genannten Gehäuseeinschnitte (24) in die Längsrichtung verläuft und sich in der hinteren, vertikal gerichteten Querseitenfläche (22) öffnet, um darin über die Längseinführung von hinten in Richtung Stirnseite ein Einpassen der aufgenommenen Kontaktzunge zuzulassen;
- und wobei jeder Gehäuseeinschnitt in der oberen Planfläche (16) des Isolierträgers (12) für einen Durchlass des genannten, gewölbten Endkontaktes (30) geöffnet (60) ist;
**dadurch gekennzeichnet, dass** die Anschlagsfläche zu einem Kreuzstück (66) gehört, das mit dem Isolierkörper (12) als Formteil einstückig gegossen ist.

2. Steckverbinder gemäß dem voranstehenden Anspruch, **dadurch gekennzeichnet, dass** die Anschlagsfläche aus der unteren Fläche (70) des Kreuzstücks (66) besteht, und **dadurch gekennzeichnet, dass** die obere Fläche des Kreuzstücks (66) ein Teilabschnitt der oberen Planfläche des Isolierkörpers ist.

3. Steckverbinder gemäß einen der beiden voranstehenden Ansprüche, **dadurch gekennzeichnet, dass** das Kreuzstück (66) zur hinteren, vertikal gerichteten Querseitenfläche (22) angrenzt, und **dadurch gekennzeichnet, dass** sich das Kreuzstück (66) mit dem Gehäuseeinschnitt (24) in einer Linie erstreckt.

4. Steckverbinder gemäß einen der voranstehenden Ansprüche, **dadurch gekennzeichnet, dass** jeder Gehäuseeinschnitt (24) vertikal nach unten in eine horizontale, untere Planfläche (18) des Isolierkörpers (12) verläuft.

5. Steckverbinder gemäß einen der voranstehenden Ansprüche, **dadurch gekennzeichnet, dass** das mittlere Verbindungsteil (38) einer jeden Kontaktzunge (14) ein haarnadelkurvenförmiger Überbiegungsabschnitt ist, der sich im Hinblick auf die obere Planfläche (16) des Isolierkörpers (12) in etwa parallel erstreckt, welches eine erste Verzweigung (40) aufweist, deren freies Ende über das Anschlussendstück (34) der Kontaktzunge (14) verlängert wird, wobei die erste Verzweigung für ein Befestigen der Kontaktzunge (14) auf dem Isolierkörper (12) Mittel (47) umfasst, und welches eine zweite Verzweigung (42) aufweist, deren freies Ende über den gewölbten Endkontakt (30) der Kontaktzunge (14) verlängert wird, wobei die erste (40) und die zweite Verzweigung (42) über ein U-förmiges, mittleres Überbiegungsteil (38) miteinander verbunden sind, das zur Mitte des Steckverbinders gerichtet ist.

6. Steckverbinder gemäß Anspruch 5, **dadurch gekennzeichnet, dass** das freie Ende (46) von der ersten Verzweigung (40) des mittleren Verbindungsteils (38) der Kontaktzunge (14) in einem Gehäuseeinschnitt des Isolierkörper integriert ist.

7. Steckverbinder gemäß Anspruch 6, **dadurch gekennzeichnet, dass** sich der gewölbte Endkontakt (30) einer jeden Kontaktzunge (14) zu dem integrierten, freien Ende (46) der ersten Verzweigung (40) von dem mittleren Verbindungsteil der Kontaktzunge (14) ungefähr in einer Linie erstreckt.

8. Elektrischer Steckverbinder gemäß einem der voranstehenden Ansprüche 4 bis 7, **dadurch gekennzeichnet, dass** der gewölbte Endkontakt (30) zwischen der mittleren Überbiegung und dem Anschlussendstück (34) längsgerichtet positioniert ist.

9. Steckverbinder gemäß einem der voranstehenden Ansprüche 5 bis 8 in Kombination mit einem der Ansprüche 3 und 4, **dadurch gekennzeichnet, dass** das Anschlussendstück (34) einer jeden Kontaktzunge (14) über die hintere, vertikal gerichtete Querseitenfläche (22) hinaus nach rückwärts längsgerichtet absteht.

10. Steckverbinder gemäß einem der voranstehenden Ansprüche 5 bis 8 in Kombination mit einem der Ansprüche 3 und 4, **dadurch gekennzeichnet, dass** das Anschlussendstück (34) einer jeden Kontaktzunge (14) zur Stirnseite der hinteren, vertikal gerichteten Querseitenfläche (22) längsgerichtet positioniert ist.

11. Elektrischer Steckverbinder gemäß einen der Ansprüche 9 und 10, **dadurch gekennzeichnet, dass** sich das Anschlussendstück (34) einer jeden Kontaktzunge (14) horizontal erstreckt.

12. Elektrischer Steckverbinder gemäß einen der Ansprüche 9 und 10, **dadurch gekennzeichnet, dass** sich das Anschlussendstück (34) einer jeden Kontaktzunge (14) vertikal nach unten erstreckt.

13. Elektrischer Steckverbinder gemäß einen der Ansprüche 9 und 10, **dadurch gekennzeichnet, dass** sich das Anschlussendstück (34) von einer jeden Kontaktzunge (14) abwärts unterhalb von der unteren Planfläche (18) des Isolierkörpers (12) erstreckt und einen rechten Winkel zur Ebene von dieser Fläche herstellt, und **dadurch gekennzeichnet, dass** das Anschlussendstück (34, 78) elastisch verformbar ist.

14. Steckverbinder gemäß einem der Ansprüche 8 bis 12, **dadurch gekennzeichnet, dass** das Anschlussendstück (34) von der Außenseite des Isolierkörpers (12) her sichtbar ist.

15. Elektrischer Steckverbinder gemäß einem der voranstehenden Ansprüche, **dadurch gekennzeichnet, dass** der Steckverbinder eine integrierte, elektrische Schaltung für ein Erfassen der Längspositionierung der Karte in Bezug auf den Isolierkörper (12) aufweist.

16. Steckverbinder gemäß einem der voranstehenden Ansprüche, **dadurch gekennzeichnet, dass** der Isolierkörper (12) durch die vertikal gerichteten Längsseitenflächen (20) und durch die vertikal gerichteten Querseitenflächen (22) sowie durch eine horizontale, untere Planfläche (18) begrenzt ist, und **dadurch gekennzeichnet, dass** mindestens ein Paar der sich gegenüberliegenden Seitenflächen jeweils einen unteren Fassungsrand (80, 84) aufweist, der von dem Isolierkörper (12) nach außen absteht, und der durch eine horizontale, obere Facettenfläche (82, 86) vertikal von oben her begrenzt ist, insbesondere deswegen, damit eine andere Komponente auf dieser Facettenfläche auflagern kann.

17. Steckverbinder gemäß einem der voranstehenden Ansprüche, **dadurch gekennzeichnet, dass** der transversale Abstand (D), der eine vertikal gerichtete Längsseitenfläche (20) von der vertikalen Mittelebene trennt, welche durch die unmittelbar benachbarten Kontaktzungen-Paare (14) hindurchgeht, dem Hälftestandardabstand (P) entspricht, der die zwei benachbarten Kontaktzungen (14) trennt.

18. Steckverbinder gemäß einem der voranstehenden Ansprüche, **dadurch gekennzeichnet, dass** der Isolierkörper (12) Profile (108) aufweist, die es ermöglichen, dass er in ein komplementäres Zubehörteil (116) einpassen kann.

## Revendications

1. Connecteur électrique (10) pour le raccordement d'une carte à mémoire électronique comportant sur une de ses faces principales une pluralité de plages de contact électrique alignées, le connecteur comportant un bloc en matériau isolant formant porte-contacts (12) présentant une face plane (16) supérieure horizontale parallèle à la direction longitudinale d'introduction (I) de la carte dans un dispositif de lecture-écriture et une pluralité de conducteurs électriques (14) en forme de lames déformables élastiquement (14, 30) disposées parallèlement à la direction (I) d'introduction de la carte, chaque lame (14) de contact comprenant :
- une première extrémité incurvée de contact (30) avec une plage correspondante de la carte, ladite première extrémité faisant saillie hors du plan de la face plane supérieure (16) du bloc isolant (12) et se prolongeant par un bec (32) qui est sollicité élastiquement, verticalement vers le haut, en appui contre une surface de butée ;
- une portion médiane de liaison (38, 40) de la lame (14) au bloc isolant (12) ; et
- une seconde extrémité de raccordement (34) de la lame (14) à un circuit de traitement du dispositif de lecture-écriture ; et du type dans lequel :
- le bloc isolant (12) est délimité longitudinalement par au moins une face transversale plane verticale arrière (22) dans laquelle face (22) des logements (24) débouchent longitudinalement,
- chaque logement (24) reçoit une lame de contact (14),
- chacun des logements (24) débouche longitudinalement et est ouvert dans ladite face transversale arrière (22), afin de permettre la mise en place de la lame de contact reçue à l'intérieur par introduction longitudinale d'arrière en avant,
- et chaque logement est ouvert (60) dans la face supérieure plane (16) du bloc isolant (12) pour le passage de ladite extrémité incurvée de contact (30),
**caractérisé en ce que** ladite surface de butée appartient à une traverse (66) réalisée venue de matière par moulage avec le bloc isolant (12).

2. Connecteur selon la revendication précédente, **caractérisé en ce que** ladite surface de butée est constituée par la face inférieure (70) de la traverse (66), et **en ce que** la face supérieure de la traverse (66) est une portion de la face supérieure plane du bloc isolant.

3. Connecteur selon l'une quelconque des revendications précédentes, **caractérisé en ce que** la traverse (66) est adjacente à ladite face latérale transversale (22), et **en ce que** la traverse (66) s'étend au droit dudit logement (24).

4. Connecteur selon l'une quelconque des revendications précédentes, **caractérisé en ce que** chaque logement (24) débouche verticalement vers le bas dans une face inférieure plane horizontale (18) du bloc isolant (12).

5. Connecteur selon l'une quelconque des revendications précédentes, **caractérisé en ce que** la partie médiane de liaison (38) de chaque lame (14) est une partie repliée en forme d'épingle à cheveux s'étendant sensiblement parallèlement à la face plane supérieure (16) du bloc isolant (12), comportant une première branche (40) dont l'extrémité libre se prolonge par l'extrémité de raccordement (34) de la lame (14) et qui comporte des moyens (47) de fixation de la lame (14) au bloc isolant (12), et comportant une seconde branche (42) dont l'extrémité libre se prolonge par l'extrémité incurvée de contact (30) de la lame (14), la première (40) et la seconde (42) branches étant reliées entre elles par un pli médian en forme de U (38) tourné vers le centre du connecteur.

6. Connecteur électrique selon la revendication 5, **caractérisé en ce que** l'extrémité libre (46) de la première branche (40) de la partie médiane de liaison (38) de la lame (14) est encastrée dans un logement du bloc isolant (12).

7. Connecteur électrique selon la revendication 6, **caractérisé en ce que** l'extrémité incurvée de contact (30) de chaque lame (14) s'étend sensiblement au droit de l'extrémité libre encastrée (46) de la première branche (40) de la partie médiane de liaison de la lame (14).

8. Connecteur électrique selon l'une quelconque des revendications 4 à 7, **caractérisé en ce que** l'extrémité incurvée de contact (30) est située longitudinalement entre ledit pli médian, et l'extrémité de raccordement (34) .

9. Connecteur selon l'une quelconque des revendications 5 à 8 prise en combinaison avec l'une des revendications 3 ou 4, **caractérisé en ce que** l'extrémité de raccordement (34) de chaque lame (14) fait saillie longitudinalement vers l'arrière au-delà de ladite face transversale arrière (22).

10. Connecteur selon l'une quelconque des revendications 5 à 8 prise en combinaison avec l'une quelconque des revendications 3 ou 4, **caractérisé en ce que** l'extrémité de raccordement (34) de chaque lame (14) est située longitudinalement en avant de ladite face transversale arrière (22).

11. Connecteur électrique selon l'une des revendications 9 ou 10, **caractérisé en ce que** l'extrémité de raccordement (34) de chaque lame (14) s'étend horizontalement.

12. Connecteur électrique selon l'une des revendications 9 ou 10, **caractérisé en ce que** l'extrémité de raccordement (34) de chaque lame (14) s'étend verticalement vers le bas.

13. Connecteur électrique selon l'une des revendications 9 ou 10, **caractérisé en ce que** l'extrémité de raccordement (34) de chaque lame (14) s'étend vers le bas en dessous de la face plane inférieure (18) du bloc isolant (12) en formant un angle aigu avec le plan de cette dernière, et **en ce que** l'extrémité de raccordement (34, 78) est déformable élastiquement.

14. Connecteur selon l'une quelconque des revendications 8 à 12, **caractérisé en ce que** l'extrémité de raccordement (34) est visible depuis l'extérieur du bloc isolant (12).

15. Connecteur électrique selon l'une quelconque des revendications précédentes, **caractérisé en ce qu'**il comporte un commutateur électrique intégré de détection de la position longitudinale de la carte par rapport au bloc isolant (12).

16. Connecteur selon l'une quelconque des revendications précédentes, **caractérisé en ce que** le bloc isolant (12) est délimité par des faces latérales verticales d'orientation longitudinale (20) et transversale (22), et par une face inférieure plane horizontale (18), et **en ce que** l'une au moins des paires de faces latérales opposées comportent chacune un rebord inférieur (80, 84) qui fait saillie vers l'extérieur du bloc isolant (12) et qui est délimité verticalement vers le haut par une facette supérieure horizontale (82, 86), notamment pour l'appui d'un autre composant (116) sur cette facette.

17. Connecteur selon l'une quelconque des revendications précédentes, **caractérisé en ce que** la distance (D) transversale séparant une face latérale longitudinale (20) du plan vertical médian passant par la paire de lames (14) immédiatement adjacente est égale à la moitié du pas normalisé (P) séparant deux lames adjacentes (14).

18. Connecteur selon l'une quelconque des revendications précédentes, **caractérisé en ce que** le bloc isolant (12) comporte des formes (108) permettant son emboîtement dans un accessoire complémentaire (116).
